# EUROPEAN PATENT APPLICATION

(11) **EP 4 836 257 A1**
(43) Date of publication of application: **04.11.2026**
(21) Application number: 24911448.9
(22) Date of filing: 27.12.2024
(51) Int. Cl.: H02K 11/215, H02K 3/50, H02K 1/16, H02K 41/03, F16F 6/00, H02K 1/32

(54) **CENTRAL ROD, STATOR, ELECTROMAGNETIC DAMPER, AND VEHICLE**

(30) Priority: 29.12.2023 CN 202311867740
(71) Applicant: BYD Company Limited, Shenzhen, Guangdong 518118 (CN)
(72) Inventor: LIN, Jinhong, Shenzhen, Guangdong 518118 (CN); LIAO, Yinsheng, Shenzhen, Guangdong 518118 (CN); ZHAO, Gaoming, Shenzhen, Guangdong 518118 (CN); SUN, Xianmeng, Shenzhen, Guangdong 518118 (CN); ZHANG, Feng, Shenzhen, Guangdong 518118 (CN)
(74) Representative: Mathys & Squire
(86) International application number: PCT/CN2024/143116
(87) International publication number: WO 2025/140528

(57) **Abstract**

A central rod, a stator, an electromagnetic damper, and a vehicle. The central rod is provided with an anti-rotation groove, which is adapted to be matched to a rotor in such a way as to limit rotation of the rotor relative to the central rod; and the outer surface of the peripheral wall of the central rod is further provided with a sensor mounting area for mounting of a sensor.

## Description

### CROSS-REFERENCE TO RELATED APPLICATIONS

The present disclosure claims priority to Chinese Patent Application No. 202311867740.0 filed with the China National Intellectual Property Administration on December 29, 2023, titled "central rod, stator, linear motor, electromagnetic damper, suspension system, and vehicle", which is incorporated herein by reference in its entirety.

### FIELD

The present application relates to the technical field of motors, and in particular to a central rod, a stator, an electromagnetic damper and a vehicle.

### BACKGROUND

In the related art, the electromagnetic damper includes a housing, a stator and a mover, and the stator and the mover are arranged in the housing. In the existing art, it is impossible to effectively detect the positional relationship between the stator and the mover, which affects the working performance of the electromagnetic damper.

### SUMMARY

The present application aims to solve at least one of the technical problems existing in the prior art. To this end, the present application proposes a central rod that can be used to fix the sensor, which is conducive to improving the detection accuracy of the sensor.

This application also proposes a stator.

The present application also proposes an electromagnetic damper.

The present application also proposes a vehicle.

According to the central rod of the embodiment of the present application, the central rod is provided with an anti-rotation groove, the anti-rotation groove is adapted to cooperate with a mover to limit rotation of the mover relative to the central rod; and an outer surface of a peripheral wall of the central rod is further provided with a sensor mounting area for mounting a sensor.

According to the central rod of the embodiment of the present application, the central rod can be applied to the electromagnetic damper. By providing an anti-rotation groove and a sensor mounting area on the central rod, the rotation of the mover relative to the central rod can be reduced, thereby improving the reliability of operation of the electromagnetic damper. The sensor can also be fixed to avoid arranging the sensor on the mover and affecting its detection accuracy.

According to some embodiments of the present application, an interior of the central rod is provided with a hollow cavity, and the peripheral wall of the central rod is provided with a central rod cable outlet through-hole communicating with the hollow cavity.

According to some embodiments of the present application, the sensor mounting area at least includes a sensor positioning plane, and a sensor fixing structure is arranged on the sensor positioning plane.

According to some embodiments of the present application, the central rod includes a first rod segment and a second rod segment, the sensor mounting area is located on the first rod segment, and a magnetic component mounting area is arranged on the second rod segment.

According to some embodiments of the present application, in an axial direction of the central rod, the central rod cable outlet through-hole is located between the sensor mounting area and the magnetic component mounting area.

According to some embodiments of the present application, the interior of the central rod is provided with a cooling chamber, and the cooling chamber is adapted to accommodate a cooling medium, and the cooling chamber extends from the second rod segment into the first rod segment.

According to some embodiments of the present application, the cooling chamber is a closed chamber; or, a medium filling port communicating with the cooling chamber is arranged at one end of the first rod segment remote from the second rod segment.

According to some embodiments of the present application, the anti-rotation groove is arranged in the first rod segment.

According to some embodiments of the present application, a positioning groove is arranged in the second rod segment, and the positioning groove is adapted to cooperate with a magnetic component installed on the magnetic component mounting area to limit a rotation of the magnetic component relative to the central rod.

According to some embodiments of the present application, the central rod further includes a rod ring structure, and an outer diameter of the rod ring structure is greater than an outer diameter of the second rod segment, the rod ring structure is used to stop the magnetic component in the axial direction of the central rod, and the central rod cable outlet through-hole is formed on the side of the rod ring structure facing away from the second rod segment.

According to some embodiments of the present application, the end of the first rod segment remote from the second rod segment is provided with a first threaded segment, which is configured to be screwed to a fastening nut, and the end of the second rod segment remote from the first rod segment is provided with a second threaded segment, which is configured to be screwed to a limiting nut, and the magnetic component mounting area is located between the rod ring structure and the second threaded segment.

According to the stator of the embodiment of the present application, includes a position sensor and the central rod of the above embodiment, and the position sensor is mounted in the sensor mounting area.

According to the stator of the embodiment of the present application, by providing the above-mentioned central rod, the central rod can be applied to the electromagnetic damper. By providing the sensor mounting area on the central rod, it can be used to fix the sensor, avoiding providing the sensor on the mover and affecting its detection accuracy.

According to some embodiments of the present application, the stator further includes a cable passing through the central rod cable outlet through-hole, wherein the cable is partially located in the hollow cavity inside the central rod and partially located outside the central rod; and a magnetic component sleeved on the magnetic component mounting area of the central rod, wherein the cable is partially disposed on an outer periphery of the magnetic component, and the magnetic component includes winding leads extending to the outer periphery of the magnetic component and adapted to connect to the cable.

According to some embodiments of the present application, the central rod includes a first rod segment and a second rod segment, the sensor mounting area is located on the first rod segment, the magnetic component mounting area is located on the second rod segment, the hollow cavity includes a cable routing cavity inside the first rod segment, the central rod cable outlet through-hole communicates with the cable routing cavity, and the stator further includes a cable outlet device disposed in the cable routing cavity to fix the cable.

According to some embodiments of the present application, one axial end of the cable outlet device is provided with a cable threading hole inlet, the other axial end of the cable outlet device is provided with a cable threading hole outlet, the cable is adapted to pass through the cable threading hole inlet and the cable threading hole outlet, a plurality of cable threading hole outlets are provided, the plurality of cable threading hole outlets are spaced apart along the axis of the cable outlet device, and the cable threading hole outlets are adapted to be aligned with the corresponding central rod cable outlet through-holes.

According to some embodiments of the present application, the cable threading hole inlet is in one-to-one correspondence with the cable threading hole outlet, and a cable channel for fixing the corresponding cable is formed between the cable threading hole inlet and the corresponding cable threading hole outlet, and a difference between a diameter of the cable channel and an outer diameter of the corresponding cable fixed therein is not greater than 5 mm.

According to some embodiments of the present application, the magnetic component includes an iron core including a plurality of winding slots distributed along the axial direction of the iron core; a winding is wound in the winding slots, outer end leads of the winding form the winding leads, and the winding leads are connected to the cable; the cable includes a phase cable portion and a wiring cable portion connected to each other, and the phase cable portion is located inside the hollow cavity and passes through the central rod cable outlet through-hole, and the winding has a plurality of winding leads of the same phase, and the plurality of winding leads of the same phase are connected in series through the wiring cable portion.

According to some embodiments of the present application, a plurality of windings of the same phase are provided, the wiring cable portion is arranged in multiple segments, and the winding leads of adjacent windings of the same phase are connected in series through corresponding wiring cable portions.

According to some embodiments of the present application, a plurality of wire outlet slots are arranged in the iron core, the wire outlet slots are circumferentially spaced apart on the iron core, at least part of the wiring cable portion is adapted to be embedded in the wire outlet slots, a plurality of reinforcing ribs are arranged at a bottom end portion of the iron core, the reinforcing ribs are spaced apart to form wire inlet passages, and the wiring cable portion is adapted to be connected to the wiring cable portions of other phases through the corresponding wire outlet slots and wire inlet passages.

According to some embodiments of the present application, the stator further includes a limiting pad, the limiting pad is sleeved on the central rod, and the limiting pad cooperates with the central rod cable outlet through-hole to secure the cable; the central rod further includes a first rod segment, a second rod segment and a rod ring structure, the first rod segment and the second rod segment are spaced apart by the rod ring structure, one part of the central rod cable outlet through-hole is formed in the first rod segment, and the other part is formed in the rod ring structure, the limiting pad is sleeved on the first rod segment, and the limiting pad and the central rod cable outlet through-hole enclose the wiring cable limiting passage, and the cable is adapted to pass through the wiring cable limiting passage.

According to some embodiments of the present application, one end of the cable remote from the magnetic component passes out of the central rod and is connected to a plug connector.

According to the electromagnetic damper of the embodiment of the present application, the electromagnetic damper includes a mover and the stator of the above embodiment, the mover has a mover cavity, the stator is arranged in the mover cavity, the mover is axially movable relative to the stator.

According to the electromagnetic damper of the embodiment of the present application, by providing the above-mentioned stator, the central rod can be applied to the electromagnetic damper. By providing the sensor mounting area on the central rod, it can be used to fix the sensor, avoiding providing the sensor on the mover and affecting its detection accuracy.

According to some embodiments of the present application, the mover includes a housing; a mover magnet, the mover magnet being installed on an inner wall of the housing, an inner side of the mover magnet forming the mover cavity, and the mover magnet being sleeved on the outer periphery of the magnetic component installed on the central rod;

a guide post, the guide post being connected to the housing, the guide post being further adapted to be connected to a lower control arm of a vehicle, the hollow cavity inside the central rod including a guide cavity, and at least part of the guide post being adapted to extend into the guide cavity and being axially movable along the central rod.

According to some embodiments of the present application, the electromagnetic damper further includes a first plain bearing and a second plain bearing, and the housing has a housing bore, and the central rod passes through the housing bore to partially extend out of the housing, and the first plain bearing is disposed between the housing bore and an outer peripheral surface of the central rod, and the second plain bearing is disposed between the outer peripheral surface of the guide post and a wall of the hollow cavity.

According to some embodiments of the present application, the mover further includes a buffer pad, the buffer pad being sleeved on the guide post and located outside an end of the central rod.

According to some embodiments of the present application, the housing is provided with a positioning hole, and a positioning pin is adapted to pass through the positioning hole and cooperate with an anti-rotation groove axially extending on the central rod to limit a rotation of the housing relative to the central rod.

According to some embodiments of the present application, the electromagnetic damper further includes a top mount, a spring is disposed between the top mount and the housing, the top mount includes an upper support member adapted to be connected to the vehicle body, the central rod is adapted to pass through the upper support member, and the central rod has an end shoulder, and the upper support member abuts against the end shoulder; a fastening nut located on a side of the upper support member facing away from the mover, the fastening nut being adapted to be screwed with a first threaded segment on the central rod, and the upper support member being clamped between the fastening nut and the end shoulder; and a cooler fixed on the central rod, a cooling chamber inside the central rod being adapted to exchange heat with the cooler.

According to the vehicle of the embodiment of the present application, the vehicle includes a suspension system, and the suspension system includes the electromagnetic damper of the above-mentioned embodiment. By providing the above-mentioned electromagnetic damper, the central rod can be applied to the electromagnetic damper. By providing a sensor mounting area on the central rod, it can be used to fix the sensor, avoiding providing the sensor on the mover and affecting its detection accuracy.

Additional aspects and advantages of the present application will be given in part in the description below, and in part will become obvious from the description below, or will be learned through practice of the present application.

### BRIEF DESCRIPTION OF THE DRAWINGS

The above and/or additional aspects and advantages of the present application will become apparent and easily understood from the description of the embodiments in conjunction with the following drawings, in which:
FIG. 1 is a cross-sectional view of an electromagnetic damper according to an embodiment of the present application;
FIG. 2 is an enlarged view of point A according to FIG. 1 ;
FIG. 3 is an enlarged view of FIG. 1 at point B;
FIG. 4 is a cross-sectional view of a central rod according to an embodiment of the present application;
FIG. 5 is a perspective view of a central rod according to an embodiment of the present application;
FIG. 6 is a partial cross-sectional view of a central rod according to an embodiment of the present application;
FIG. 7 is a partial cross-sectional enlarged view of the central rod according to an embodiment of the present application;
FIG. 8 is a schematic diagram of the assembly of the central rod and the magnetic component according to an embodiment of the present application;
FIG. 9 is a schematic diagram of the assembly of the central rod and the housing according to an embodiment of the present application;
FIG. 10 is a perspective view of a cable outlet device according to an embodiment of the present application;
FIG. 11 is a schematic diagram of a suspension system according to an embodiment of the present application;
FIG. 12 is a schematic diagram of a vehicle according to an embodiment of the present application.

Reference numerals:
vehicle 10000, suspension system 2000, electromagnetic damper 1000, stator 100, mover 600, top mount 700, sensor 800;
central rod 1, first rod segment 11, first outlet half hole 111, anti-rotation groove 112, end shoulder 113, second rod segment 12, magnetic component mounting area 122, cable routing cavity 13, peripheral wall 14, sensor mounting area 141, sensor positioning plane 1411, sensor fixing structure 1412, cooling chamber 142, medium filling port 1421, rod ring structure 15, second outlet half hole 152, central rod cable outlet through-hole 16, first threaded segment 171, second threaded segment 172, limiting nut 18, guide cavity 19;
cable 2, plug connector 21, wiring cable portion 22, phase cable portion 23, magnetic component 3, winding 31, iron core 32, reinforcing rib 321, wire harness fixing slot 3211, wire inlet passage 3212, wire outlet slot 322, cable outlet device 4, cable channel 41, limiting pad 5;
housing 601, positioning hole 6011, housing bore 6012, mover magnet 602, clevis 603, clevis body 6031, guide post 6032, first plain bearing 6041, second plain bearing 6042, buffer pad 605, dust cover 606, spring 607, cooler 608;
upper support member 701, fastening nut 702, rotation limiting structure 8, rotation limiting groove 82, first rotation limiting groove 821, positioning groove 822, rotation limiting pin 823.

### DETAILED DESCRIPTION

The following describes in detail embodiments of the present application. Examples of the embodiments are shown in the accompanying drawings, wherein the same or similar reference numerals throughout represent the same or similar elements or elements having the same or similar functions. The embodiments described below with reference to the accompanying drawings are exemplary and are only used to explain the present application and are not to be construed as limiting the present application.

In the description of the present application, it will be understood that the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential", etc., indicating the orientation or position relationship, are based on the orientation or position relationship shown in the accompanying drawings, and are only for the convenience of describing the present application and simplifying the description, rather than indicating or implying that the device or element referred to must have a specific orientation, be constructed and operated in a specific orientation, and therefore will not be understood as a limitation on the present application. In addition, features defined as "first" and "second" may explicitly or implicitly include one or more of such features. In the description of the present application, unless otherwise specified, "multiple" means two or more.

In the description of this application, it will be noted that, unless otherwise expressly specified or limited, the terms "mounted," "fixed", and "connected" will be understood in a broad sense. For example, they can refer to fixed connections, detachable connections, or integral connections; mechanical connections or electrical connections; direct connections or indirect connections through an intermediate medium; and internal connections between two components. Those skilled in the art will understand the specific meanings of the above terms in this application based on the specific circumstances.

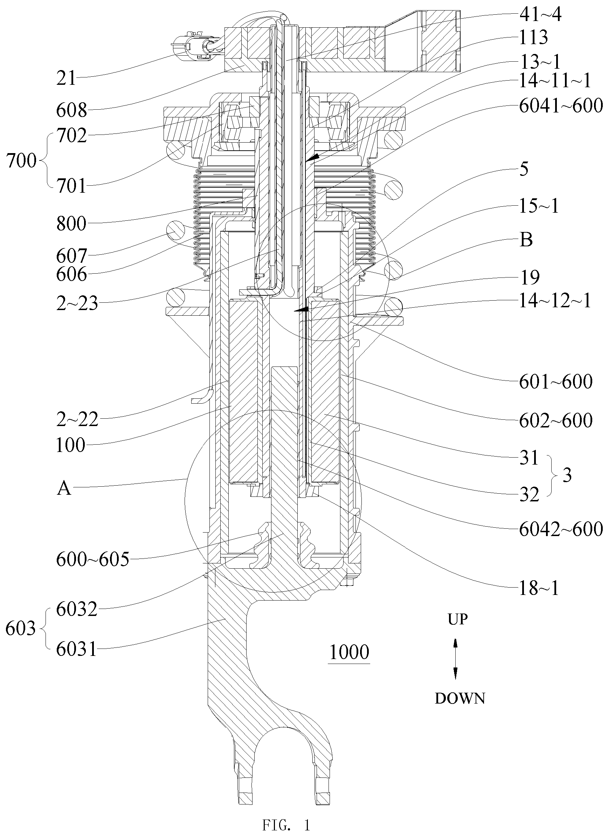

The following describes a central rod 1, a stator 100, an electromagnetic damper 1000, a suspension system 2000, and a vehicle 10000 according to an embodiment of the present application with reference to FIG. 1 to FIG. 12.

According to the central rod 1 of the embodiment of the present application, an anti-rotation groove 112 is provided on the central rod 1. The anti-rotation groove 112 is adapted to cooperate with a mover 600 to limit rotation of the mover 600 relative to the central rod 1. By providing the anti-rotation groove 112, the rotation of the mover 600 relative to the central rod 1 can be reduced, thereby improving the reliability of the operation of the electromagnetic damper 1000. A sensor mounting area 141 is also provided on the outer surface of the peripheral wall 14 of the central rod 1. The sensor mounting area 141 can be used to install the sensor 800. The peripheral wall 14 is an annular solid structure with a certain thickness. The inner side of the peripheral wall 14 encloses a hollow cavity.

That is, the sensor 800 can be mounted on the central rod 1, and the central rod 1 is fixed in position when applied to the electromagnetic damper 1000, so that the sensor 800 will not move.

Optionally, the sensor 800 may be a displacement sensor, a velocity sensor, an acceleration sensor, a temperature sensor, etc.

In related art, the sensor is mounted on the mover, and movement of the mover causes the sensor to move, affecting the sensor's detection accuracy. Unlike the closest related art, the central rod 1 of this application can be applied to the stator 100 of the electromagnetic damper 1000. When the sensor 800 is mounted to the sensor mounting area 141 of the central rod 1, the position of the sensor 800 is fixed. The central rod 1 is also provided with an anti-rotation groove 112, which can reduce the probability of the mover 600 rotating relative to the central rod 1, thereby improving the detection accuracy of the sensor 800.

In some optional embodiments, the sensor 800 installed in the sensor mounting area 141 does not include a signal output line. The sensor 800 includes a bracket and a magnet. The magnet is installed on the bracket, and the bracket is installed on the sensor mounting area 141.

In other optional embodiments, the sensor 800 may include a signal output line. For example, when the sensor 800 is a temperature sensor, it has a signal output line. The signal output line can pass through the central rod cable outlet through-hole 16 and be accommodated in the hollow cavity. The hollow cavity of the central rod 1 can protect the signal output line of the sensor 800. When the mover 600 of the electromagnetic damper 1000 makes linear motion relative to the central rod 1, since the signal output line of the sensor 800 passes through the central rod cable outlet through-hole 16 and is accommodated in the hollow cavity, the risk of the signal output line being squeezed or damaged can be reduced.

According to the central rod 1 of the embodiment of the present application, the central rod 1 can be applied to the electromagnetic damper 1000. By providing the anti-rotation groove 112 and the sensor mounting area 141 on the central rod 1, the rotation of the mover 600 relative to the central rod 1 can be reduced, thereby improving the reliability of the operation of the electromagnetic damper 1000. The sensor 800 can also be fixed to avoid providing the sensor 800 on the mover 600 and affecting its detection accuracy.

As shown in FIGS. 1 to 4, according to the central rod 1 of the embodiment of the present application, the central rod 1 is provided with an internal hollow cavity, and a central rod cable outlet through-hole 16 is opened on the peripheral wall 14 of the central rod 1, and the central rod cable outlet through-hole 16 is connected to the hollow cavity.

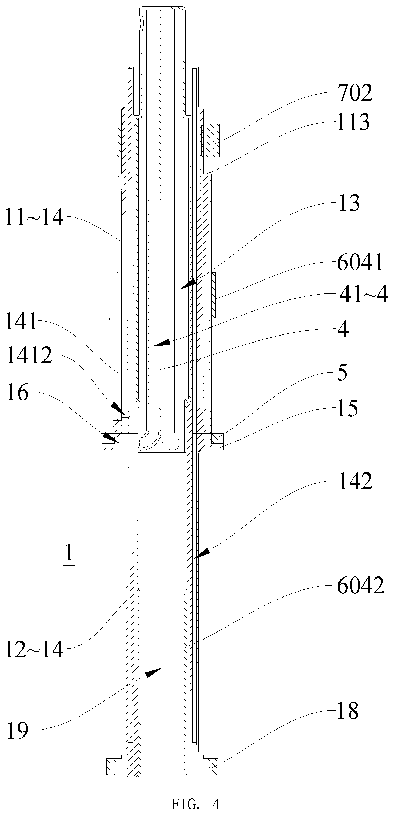

As shown in FIGS. 4 to 7, in some embodiments, the sensor mounting area 141 includes at least a sensor positioning plane 1411, on which a sensor fixing structure 1412 is provided. The sensor positioning plane 1411 allows the sensor 800 to be positioned more stably, improving the stability and reliability of the sensor 800's detection operation. Furthermore, the sensor fixing structure 1412 secures the sensor 800 to the sensor positioning plane 1411, preventing it from falling off and improving the stability and reliability of the connection. When the sensor 800 includes a bracket and a magnet, the bracket can be secured to the sensor positioning plane 1411 via the sensor fixing structure 1412, and the magnet can be adhered to the bracket.

Optionally, the sensor fixing structure 1412 may be a screw hole, a rivet hole, etc.

A sensor positioning structure may also be provided on the sensor positioning plane 1411 to position the sensor 800 at an accurate position before fixing the sensor 800. Optionally, the sensor positioning structure may be a positioning hole, a positioning pin, or the like.

As shown in FIGS. 4 to 7, for example, the central rod 1 has a circular cross-section, the outermost side of the peripheral wall 14 is a cylindrical surface, and the sensor positioning plane 1411 is a straight wall surface formed by the outer side of the peripheral wall 14 being recessed toward the inner side of the peripheral wall 14. Optionally, the sensor positioning plane 1411 is parallel to the axis of the central rod 1.

As shown in FIGS. 1 to 5, in some embodiments, the central rod 1 includes a first rod segment 11 and a second rod segment 12. The sensor mounting area 141 is located on the first rod segment 11, and the second rod segment 12 is provided with a magnetic component mounting area 122. The sensor 800 is mounted on the first rod segment 11 of the central rod 1, and the magnetic component 3 is mounted on the second rod segment 12 of the central rod 1, thereby reducing interference between the sensor 800 and the magnetic component 3.

As shown in FIG4, in some embodiments, in the axial direction of the central rod 1, the central rod cable outlet through-hole 16 is located between the sensor mounting area 141 and the magnetic component mounting area 122. In combination with the above embodiments, the first rod segment 11 and the second rod segment 12 are sequentially arranged along the axial direction of the central rod 1, the sensor mounting area 141 is arranged on the first rod segment 11, the magnetic component mounting area 122 is arranged on the second rod segment 12, and the sensor 800 is mounted on the sensor mounting area 141, the magnetic component 3 is mounted on the magnetic component mounting area 122 of the central rod 1, and the central rod cable outlet through-hole 16 is arranged between the sensor mounting area 141 and the magnetic component mounting area 122. In other words, the sensor 800 and the magnetic component 3 are separated in the axial direction of the central rod 1, and the central rod cable outlet through-hole 16 is arranged between the sensor 800 and the magnetic component 3. As a result, the electrical connection line of the magnetic component 3 can be close to the central rod cable outlet through-hole 16, thereby reducing the length of the electrical connection line and saving costs. When the sensor 800 has a signal transmission line, the signal transmission line of the sensor 800 can be close to the central rod cable outlet through-hole 16, thereby reducing the length of the signal transmission line and saving costs.

As shown in FIGS. 4, 6, and 7, in some embodiments, the central rod 1 is provided with a cooling chamber 142 located between the outer and inner sides of the peripheral wall 14. The cooling chamber 142 can accommodate a cooling medium and extends from the second rod segment 12 into the first rod segment 11. The cooling chamber 142 can cool the central rod 1. Because the cooling chamber 142 extends from the second rod segment 12 to the first rod segment 11, the cooling chamber 142 can cool the entire central rod 1. When the central rod 1 is used in an electromagnetic damper 1000, the cooling chamber 142 can cool the interior of the electromagnetic damper 1000, thereby improving the reliability and safety of the electromagnetic damper 1000.

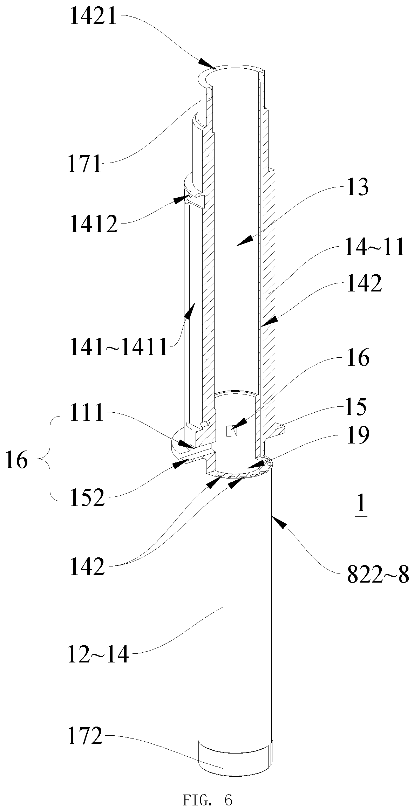

As shown in FIG. 6, optionally, a single-layer cooling structure can be provided between the outer side surface and the inner side surface of the peripheral wall 14, that is, in the radial direction of the central rod 1, the interior of the central rod 1 can include multiple cooling chambers 142, and the multiple cooling chambers 142 are dispersedly arranged around the axis of the central rod 1. For example, the multiple cooling chambers 142 can all be located on the same circumference of the central rod 1.

Optionally, a multi-layer cooling structure can be provided between the outer side and the inner side of the peripheral wall 14, and the interior of the central rod 1 can include multiple cooling chambers 142, and the multiple cooling chambers 142 are layered in the radial direction of the central rod 1, thereby facilitating improving the cooling effect.

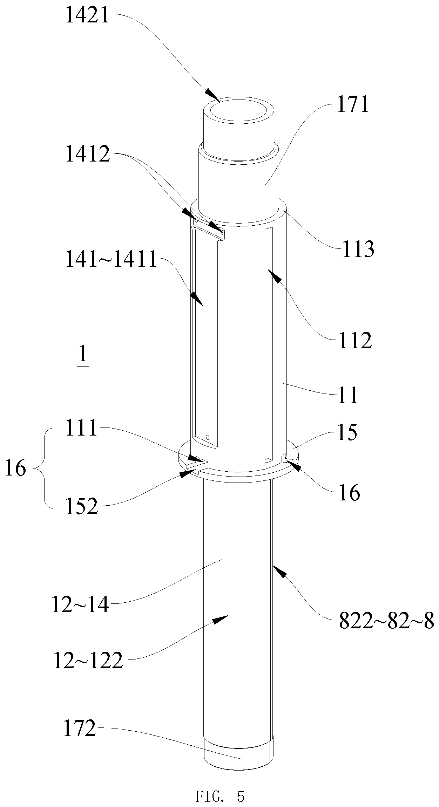

As shown in FIG. 5 and FIG. 6, in some embodiments, the cooling chamber 142 is a closed chamber, which can reduce the probability of the cooling medium of the central rod 1 overflowing outward, thereby improving the safety and reliability of the electromagnetic damper 1000 .

As shown in FIGS. 5 and 6, in some optional embodiments, a medium filling port 1421 is provided at one end of the first rod segment 11 away from the second rod segment 12. The medium filling port 1421 can be connected to the cooling chamber 142. The medium filling port 1421 can pass through the cooling medium, so that the cooling medium in the cooling chamber 142 can exchange heat with the external environment (such as air) and then dissipate heat.

Optionally, the medium filling port 1421 may include multiple ones, one of which may serve as an inlet of the cooling medium to add the cooling medium into the cooling chamber 142; another one of which may serve as an outlet of the cooling medium to allow the cooling medium to flow out to the outside.

As shown in FIGS. 1, 5 and 9, in some embodiments, an anti-rotation groove 112 is provided on the first rod segment 11. By providing the anti-rotation groove 112, the rotation of the mover 600 relative to the central rod 1 can be reduced, thereby improving the reliability of the operation of the electromagnetic damper 1000.

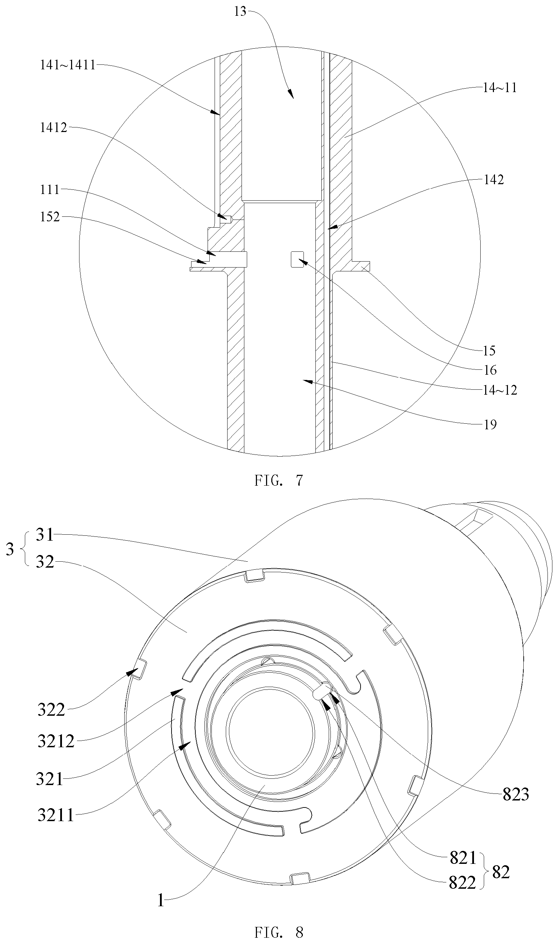

As shown in FIGS. 5 and 8, in some embodiments, a positioning groove 822 is provided on the second rod segment 12. The positioning groove 822 can cooperate with the magnetic component 3 installed on the magnetic component mounting area 122 to limit the rotation of the magnetic component 3 relative to the central rod 1. By providing the positioning groove 822, the accuracy of the cooperation between the magnetic component 3 and the central rod 1 and the convenience of installation can be improved, thereby improving the reliability of the operation of the electromagnetic damper 1000.

As shown in FIGS. 1, 5, and 9, in some embodiments, an anti-rotation groove 112 extends axially along the central rod 1. The anti-rotation groove 112 extends axially along the first rod segment 11 of the central rod 1 and is formed on the outer side of the peripheral wall 14 in the radial direction. By extending the anti-rotation groove 112 axially along the central rod 1 for a certain length, the rotation-limiting effect of the anti-rotation groove 112 can be enhanced.

As shown in FIGS. 5 and 8, in some embodiments, the positioning groove 822 extends axially along the central rod 1. The positioning groove 822 extends axially along the second rod segment 12 of the central rod 1 and is formed on the outer side of the peripheral wall 14 in the radial direction of the peripheral wall 14. By extending the positioning groove 822 axially along the central rod 1 for a certain length, the rotation-limiting effect of the positioning groove 822 can be enhanced.

As shown in FIGS. 5, 6, and 8, the magnetic component 3 includes, for example, a winding 31 and an iron core 32. The magnetic component 3 is composed of a plurality of windings 31 and iron cores 32, with a layer of windings 31 and a layer of iron cores 32 stacked and sheathed on the central rod 1. This arrangement facilitates the manufacture of the iron core 32 and the winding of the windings 31. The iron core 32 is transitionally fitted with the central rod 1, and a rotation limiting structure 8 is provided between the iron core 32 and the central rod 1. The rotation limiting structure 8 is used to limit the rotation of the iron core 32 about the axis of the central rod 1. For example, the rotation limiting structure 8 includes a rotation limiting pin 823 and a rotation limiting groove 82. The rotation limiting groove 82 includes a first rotation limiting groove 821 arranged in the iron core 32 and a positioning groove 822 on the central rod 1. The first rotation limiting groove 821 on the iron core 32 is a semicircular recess and can be matched with the positioning groove 822 of the semicircular recess on the outer side of the lower part of the central rod 1. During the assembly process, the rotation limiting pin 823 is inserted between the two. This arrangement limits the rotation of the iron core 32 around the central axis of the central rod 1, ensuring that the output line of the winding 31 is consistent with the design state, and thereby improving the stability of the connection between the iron core 32 and the central rod 1. This arrangement ensures that the entire magnetic component 3 is fixed on the central rod 1 according to the design state, which can improve the rigidity of the stator 100 and the stability of the operation of the electromagnetic damper 1000. For example, the assembly process of the central rod 1 and the iron core 32 can be as follows: first, the rotation limiting pin 823 is installed in the positioning groove 822 of the central rod 1. The rotation limiting pin 823 protrudes from the positioning groove 822 along the radial direction of the central rod 1. The rotation limiting pin 823 and the central rod 1 can be initially fixed with an adhesive material. Then, each layer of the iron core 32 after winding is pressed onto the outside of the central rod 1 in sequence. At this time, the protruding portion of the rotation limiting pin 823 can play a good guiding role in the assembly of the iron core 32, ensuring the position accuracy of each layer of winding 31. Finally, the press-fitting of all layers of the iron core 32 is completed. The central rod 1 and each layer of the iron core 32 adopt an interference fit to ensure the tightness of the fit. The assembled rotation limiting pin 823 remains between the central rod 1 and the iron core 32. During operation, since the rotation limiting pin 823 limits the circumferential rotation of the iron core 32, the unsafe factors caused by the circumferential rotation of the winding 31 are avoided.

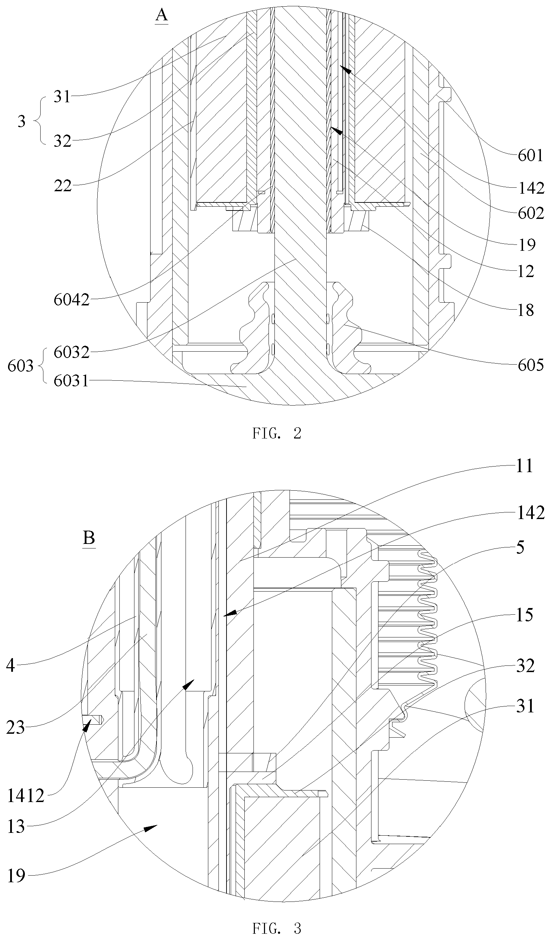

As shown in FIGS. 3 and 5, in some embodiments, the central rod 1 further includes a rod ring structure 15, the outer diameter of the rod ring structure 15 being greater than the outer diameter of the second rod segment 12, and the rod ring structure 15 can stop the magnetic component 3 in the axial direction of the central rod 1. The rod ring structure 15 is arranged between the first rod segment 11 and the second rod segment 12. In the axial direction of the central rod 1, the first rod segment 11, the rod ring structure 15 and the second rod segment 12 are arranged in sequence. For example, the magnetic component 3 is installed on the magnetic component mounting area 122 of the second rod segment 12, and the rod ring structure 15 is located on the upper side of the magnetic component 3 (as shown in FIG. 1). The rod ring structure 15 can limit the axial movement of the magnetic component 3 and prevent the magnetic component 3 from moving to the first rod segment 11.

As shown in FIGS. 5, 6, and 7, in some embodiments, the central rod cable outlet through-holes 16 are located on the side of the rod ring structure 15 facing away from the second rod segment 12. The central rod cable outlet through-holes 16 may be provided only in the first rod segment 11, only in the rod ring structure 15, or partially in the first rod segment 11 and partially in the rod ring structure 15. For example, along the axis of the central rod 1, the rod ring structure 15 has a certain thickness, and each central rod cable outlet through-hole 16 is partially provided in the rod ring structure 15, not completely extending through the thickness of the rod ring structure 15. In the radial direction of the central rod 1, the outer diameter of the rod ring structure 15 is greater than the outer diameter of the second rod segment 12, and the central rod cable outlet through-holes 16 protrude radially from the second rod segment 12. The rod ring structure 15 can guide and protect electrical connectors, such as signal output cables and other wiring harnesses.

As shown in FIGS. 1, 2, 5, and 6, in some embodiments, the end of the first rod segment 11 away from the second rod segment 12 is provided with a first threaded segment 171, which can be threadedly connected to the fastening nut 702. The end of the second rod segment 12 away from the first rod segment 11 is provided with a second threaded segment 172, which can be threadedly connected to the limiting nut 18. The magnetic component mounting area 122 is located between the rod ring structure 15 and the second threaded segment 172. The limiting nut 18 can be sleeved on the second threaded segment 172 of the central rod 1. The limiting nut 18 is installed at the lower end of the magnetic component 3, and the rod ring structure 15 is located at the upper end of the magnetic component 3. The limiting nut 18 and the rod ring structure 15 cooperate to limit the axial movement of the magnetic component 3.

As shown in FIG. 1, the stator 100 according to an embodiment of the present application includes a position sensor 800 and the central rod 1 of the above embodiment. The position sensor 800 is mounted in the sensor mounting area 141. The position sensor 800 can accurately detect the relative position between the mover 600 and the stator 100, thereby achieving accurate control.

According to the stator 100 of the embodiment of the present application, by providing the above-mentioned central rod 1, the central rod 1 can be applied to the electromagnetic damper 1000, and by providing the sensor mounting area 141 on the central rod 1, it can be used to fix the sensor 800, avoiding providing the sensor 800 on the mover 600 and affecting its detection accuracy.

As shown in FIGS. 1 to 3, in some embodiments, the stator 100 further includes a cable 2 and a magnetic component 3. The cable 2 is passed through the central rod cable outlet through-hole 16, a portion of the cable 2 is located in the hollow cavity of the central rod 1, and another portion of the cable 2 is located outside the central rod 1. The magnetic component 3 can be sleeved on the magnetic component mounting area 122 of the central rod 1, and a portion of the cable 2 is arranged on the outer periphery of the magnetic component 3. The magnetic component 3 includes a winding lead, which can be led out to the outer periphery of the magnetic component 3, and the winding lead can be connected to the cable 2. That is, the other portion of the cable 2 can be connected to the winding lead at the outer periphery of the magnetic component 3. Since the winding lead is connected to the cable 2 on the outside of the magnetic component 3, the tool operating space is not restricted, and the assembly space is expanded, which is conducive to reducing the difficulty of assembly and improving assembly efficiency. It is also conducive to mass production and easy to intuitively find problems during subsequent maintenance, thereby reducing maintenance costs.

In the related art, the connection position between the winding lead of the magnetic component and the cable is located on the inside of the magnetic component. The inner lead wire is not only difficult to thread back and forth for assembly, wastes materials, and takes up available space, but also inconvenient to detect because the connection position is located on the inside of the magnetic component. In the present application, the winding lead of the magnetic component 3 can be led out to the periphery of the magnetic component 3, and the cable 2 is connected to the periphery of the magnetic component 3, which has a greater assembly space, reduces the difficulty of assembly, and can also improve assembly efficiency, which is conducive to mass production and easy to intuitively find problems during subsequent maintenance.

As shown in FIGS. 1 to 3, in combination with the above embodiments, the central rod 1 includes a first rod segment 11 and a second rod segment 12. In the axial direction of the central rod 1, the first rod segment 11 is located on one side of the central rod cable outlet through-hole 16 (the upper side as shown in FIG. 1), and the second rod segment 12 is located on the other side of the central rod cable outlet through-hole 16 (the lower side as shown in FIG. 1). The magnetic component 3 can be sleeved outside the second rod segment 12. Specifically, the central rod cable outlet through-hole 16 and the magnetic component 3 are located at different positions on the central rod 1, so as to avoid interference between the cable 2 and the magnetic component 3 when passing through the central rod cable outlet through-hole 16, thereby reducing the difficulty of inserting the cable 2 into the central rod 1 and improving assembly efficiency. In addition, the cable 2 can extend downward after passing through the central rod cable outlet through-hole 16 to surround the outer periphery of the magnetic component 3, thereby avoiding waste of wire caused by excessive winding when the cable 2 passes through the inner side of the magnetic component 3 and then winds toward the outer side of the magnetic component 3. Of course, the cable 2 can also be passed from the periphery of the magnetic component 3 through the central rod cable outlet through-hole 16 into the hollow cavity. In this application, there is no limitation on the threading direction at the central rod cable outlet through-hole 16. The threading direction described is only used to illustrate the structural features.

As shown in FIGS. 1 to 3, 4 to 6, and 10, in some embodiments, the central rod 1 includes a first rod segment 11 and a second rod segment 12. The sensor mounting area 141 is located on the first rod segment 11, and the magnetic component mounting area 122 is located on the second rod segment 12. The hollow cavity includes a cable routing cavity 13 located within the first rod segment 11. The central rod cable outlet through-hole 16 is connected to the cable routing cavity 13. The stator 100 also includes a cable outlet device 4, which is disposed within the cable routing cavity 13. The cable outlet device 4 can fix the cable 2. By providing the cable outlet device 4, the movement of the cable 2 can be restrained, reducing the shaking of the cable 2 within the cable routing cavity 13. The cable outlet device 4 can also protect the cable 2 and reduce the risk of the cable 2 being squeezed or scratched. The central rod cable outlet through-hole 16 and the magnetic component 3 are located at different positions on the central rod 1 to prevent interference between the cable 2 and the magnetic component 3 when the cable 2 exits the central rod cable outlet through-hole 16. This can reduce the difficulty of inserting the cable 2 into the central rod 1, which is conducive to improving assembly efficiency. In addition, the cable 2 extends downward after passing through the central rod cable outlet through-hole 16 to surround the outer periphery of the magnetic component 3, which can avoid wire waste caused by excessive winding when the cable 2 passes through the inner side of the magnetic component 3 and then winds toward the outer side of the magnetic component 3.

In the related art, the cable is not fixed after passing through the central rod, and the inner diameter of the central rod end is reduced, making it difficult to arrange the cable outlet. Moreover, because the wiring is not fixed inside the central rod, the cable is easily squeezed or scratched by surrounding components during the movement of the electromagnetic damper, affecting the safety of the electrical system. In the present application, by providing a cable outlet device 4, the movement of the cable 2 can be constrained, reducing the shaking of the cable 2 in the cable routing cavity 13. The cable outlet device 4 also protects the cable 2, reducing the risk of the cable 2 being squeezed or scratched.

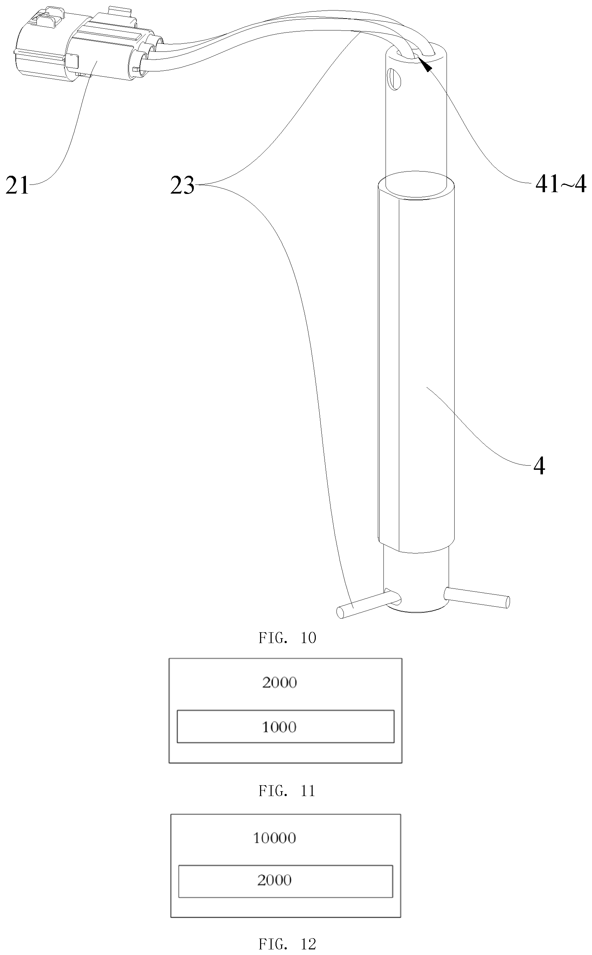

As shown in FIG. 10, in some embodiments, one axial end of the cable outlet device 4 has a cable threading hole inlet, and the other axial end of the cable outlet device 4 has a cable threading hole outlet. The cable 2 can pass through the cable threading hole inlet and the cable threading hole outlet. There are multiple cable threading hole outlets, and the multiple cable threading hole outlets are spaced apart along the axis of the cable outlet device 4. The cable threading hole outlets can be aligned with the corresponding central rod cable outlet through-holes 16, thereby reducing the probability of the cable 2 being squeezed.

As shown in FIG. 10, in some embodiments, the cable threading hole inlet and the cable threading hole outlet correspond one to one, and a cable channel 41 for fixing the corresponding cable 2 is formed between the cable threading hole inlet and the corresponding cable threading hole outlet, and the diameter of the cable channel 41 differs from the outer diameter of the fixed cable 2 by no more than 5 mm. The cable channel 41 can fix the cable 2, and the cable threading hole outlet of the cable channel 41 can be aligned with the corresponding central rod cable outlet through-hole 16. By providing the cable channel 41 on the cable outlet device 4, the outlet direction of the cable 2 can be guided and the movement of the cable 2 can be constrained. In addition, since the diameter of the cable channel 41 differs from the outer diameter of the fixed cable 2 by no more than 5 mm, the fixing and restraining effect of the cable channel 41 on the cable 2 can be improved. Optionally, the diameter of the cable channel 41 differs from the outer diameter of the fixed cable 2 by 1 mm, 2 mm, 3 mm, 4 mm, 5 mm, etc.

As shown in FIGS. 1, 3, 4 and 10, for example, the cable outlet device 4 is arranged in the cable routing cavity 13 of the central rod 1, and the cable channel 41 passes through the cable outlet device 4 along the axial direction of the cable outlet device 4 (the up and down direction as shown in FIG. 1). As shown in FIGS. 1 and 10, the cable channel 41 includes a cable threading hole inlet and a cable threading hole outlet. The cable threading hole outlet here is the outlet of the cable channel 41, and the cable threading hole outlet is aligned with the corresponding central rod cable outlet through-hole 16. The cable threading hole inlet and the cable threading hole outlet are located at the two ends of the cable channel 41 in the axial direction. The cable threading hole inlet is close to the upper end of the first rod segment 11, and the cable threading hole outlet is close to the upper end of the second rod segment 12. The cable 2 enters the cable channel 41 from the cable threading hole inlet, and the cable 2 passes through the cable channel 41 from the cable threading hole outlet. Then, the cable 2 passes through the central rod cable outlet through-hole 16 corresponding to the cable threading hole outlet of the cable channel 41.

As shown in FIGS. 1 to 3 and FIG. 8, in some embodiments, the magnetic component 3 includes an iron core 32 and a winding 31. The iron core 32 includes a plurality of winding slots, and the plurality of winding slots are dispersed along the axial direction of the iron core 32. The winding 31 can be wound in the winding slots, and the winding slots can position and install the winding 31. The outer end lead of the winding 31 is a winding lead, and the winding lead can be connected to the cable 2, so that the electrical connection between the magnetic component 3 and the cable 2 can be achieved. The winding lead is the outer end lead of the winding 31, which is convenient for realizing the electrical connection operation between the magnetic component 3 and the cable 2 from the peripheral space of the magnetic component 3. The operating space is large and relatively convenient. By arranging the winding 31 in the winding slot, the structure of the magnetic component 3 can be simplified, and the internal structure of the magnetic component 3 can be made more compact.

As shown in FIGS. 1 to 3, in some embodiments, the cable 2 includes a phase cable portion 23 and a wiring cable portion 22, and the phase cable portion 23 and the wiring cable portion 22 are connected to each other. The phase cable portion 23 is located in the cable routing cavity 13 and part of the phase cable portion 23 can pass through the central rod cable outlet through-hole 16. The winding 31 has multiple winding leads of the same phase, and multiple winding leads of the same phase are connected in series through the wiring cable portion 22. That is to say, the wiring cable portion 22 is connected in series with the winding leads of the same phase, and the wiring cable portion 22 is connected to the phase cable portion 23, thereby realizing the electrical connection between the cable 2 and the magnetic component 3. For example, the series connection of multiple winding leads of the same phase through the wiring cable portion 22 and the connection between the phase cable portion 23 and the wiring cable portion 22 can be carried out independently, which is conducive to improving assembly efficiency and achieving mass production. In conjunction with the above embodiment, the cable 2 includes a phase cable portion 23 and a wiring cable portion 22. The phase cable portion 23 is located within the cable routing cavity 13, and a portion of the phase cable portion 23 can be passed through the central rod cable outlet through-hole 16. The wiring cable portion 22 is arranged on the periphery of the magnetic component 3 and connected to the phase cable portion 23. As a result, the phase cable portion 23 can be connected to the wiring cable portion 22 on the periphery of the magnetic component 3, improving assembly efficiency and convenience. As shown in FIG. 10, the cable outlet device 4 has a cable channel 41. The cable channel 41 can fix the phase cable portion 23, and the outlet of the cable channel 41 can be aligned with the corresponding central rod cable outlet through-hole 16. By providing the cable channel 41 on the cable outlet device 4, the outlet direction of the phase cable portion 23 can be guided and the movement of the phase cable portion 23 can be restricted. The cable outlet device 4 can extend along the axial direction of the central rod 1, and the maximum outer diameter of the cable outlet device 4 is smaller than the minimum inner diameter of the central rod 1, so that the cable outlet device 4 can be accommodated in the cable routing cavity 13. The phase cable portion 23 can be partially arranged inside the cable outlet device 4. The cable outlet device 4 is configured in the cable routing cavity 13 of the central rod 1, and the cable channel 41 passes through the cable outlet device 4 along the axial direction of the cable outlet device 4 (the up and down direction as shown in FIG. 1). As shown in FIG. 10, the cable channel 41 includes a cable threading hole inlet and a cable threading hole outlet. The cable threading hole outlet here is the outlet of the cable channel 41, and the cable threading hole outlet is aligned with the corresponding central rod cable outlet through-hole 16. The cable threading hole inlet and the cable threading hole outlet are located at the two ends of the cable channel 41 in the axial direction. The cable threading hole inlet is close to the upper end of the first rod segment 11, and the cable threading hole outlet is close to the upper end of the second rod segment 12. The phase cable portion 23 enters the cable channel 41 from the cable threading hole inlet, and the phase cable portion 23 passes through the cable channel 41 from the cable threading hole outlet, and then the phase cable portion 23 passes through the central rod cable outlet through-hole 16 corresponding to the outlet of the cable channel 41.

For example, the interior of the cable outlet device 4 is a whole cavity structure, and the cable threading hole inlet and the cable threading hole outlet are both connected to the cavity structure inside the cable outlet device 4.

In some embodiments, there are multiple windings 31 of the same phase, and the wiring cable portion 22 is divided into multiple sections. The winding leads of adjacent and same-phase windings 31 are connected in series through the corresponding wiring cable portions 22. The winding leads and the wiring cable portions 22 are connected and assembled and can be further split, which is conducive to improving assembly efficiency and achieving mass production.

For example, when winding 31 is a three-phase winding, winding 31 includes a U-phase winding, a V-phase winding, and a W-phase winding. The following uses multiple U-phase windings, such as a first U-phase winding, a second U-phase winding, and a third U-phase winding, as examples to illustrate a connection structure in which multiple same-phase winding ends are connected in series via wiring cable portion 22.

The U-phase winding is wound by the U-phase winding, and the U-phase winding is installed in the winding slot. The winding leads of the U-phase winding are U-phase one end and U-phase two end respectively. The U-phase one end is the starting end of the U-phase winding, and the U-phase two end is the end of the U-phase winding, wherein the U-phase one end and the U-phase two end are both led to the outside of the magnetic component 3, and the U-phase two ends of the first U-phase winding can be connected to the U-phase one end of the second U-phase winding through the wiring cable portion 22, and the U-phase two ends of the second U-phase set can be connected to the U-phase one end of the third U-phase winding through the wiring cable portion 22, and the U-phase two ends of the third U-phase winding can be connected to the U-phase one end of the fourth U-phase winding through the wiring cable portion 22. If the U-phase winding includes N, where N is a positive integer, then after multiple winding ends of the same phase are connected in series through the wiring cable portion 22, only the U-phase one end of the first U-phase winding and the U-phase two ends of the Nth U-phase winding are left unconnected. According to the above embodiment, the U-phase ends of the N-th U-phase winding can be connected to the phase cable portion 23 via the wiring cable portion 22. The V-phase winding and the W-phase winding are similar and will not be described in detail here.

As shown in FIG8, in some embodiments, a plurality of wire outlet slots 322 are provided on the outer circumference of the iron core 32. The plurality of wire outlet slots 322 are spaced apart along the circumference of the iron core 32. At least a portion of the wiring cable portion 22 can be embedded within the wire outlet slots 322. This means that the winding ends can be led out to the outer circumference of the magnetic component 3. The winding ends can be connected to the wiring cable portion 22 within the corresponding wire outlet slots 322 on the outer circumference of the magnetic component 3. This increases the tool operating space and the assembly space, thereby reducing assembly difficulty and improving assembly efficiency. This is beneficial for mass production and makes it easier to visually detect problems during subsequent maintenance, thereby reducing maintenance costs. The bottom end of the iron core 32 is provided with a plurality of reinforcing ribs 321. The plurality of reinforcing ribs 321 are spaced apart to form wire inlet passages 3212. The wiring cable portion 22 can be connected to the wiring cable portion 22 of other phases through the corresponding wire outlet slots 322 and wire inlet passages 3212. This arrangement can make the structure more compact.

For example, the number of wire outlet slots 322 is a positive integer multiple of the total number of phases of the winding 31. The number of wire outlet slots 322 is Z, and the total number of phases of the winding 31 is M. If Q = Z/M, then Q is a positive integer. For example, if M = 3, Z can be a multiple of three, such as 3, 6, 9, or 12. This arrangement can make the spatial arrangement of the multi-phase winding 31 symmetrical, and the electric potential and magnetic potential generated by each phase winding 31 should be symmetrical, thereby improving the stability and reliability of the electromagnetic damper 1000. It can also meet the various outlet arrangement requirements of the winding leads of the winding 31.

In some embodiments, the magnetic component 3 includes a plurality of windings 31 and a plurality of iron cores 32. The windings 31 and the iron cores 32 can be alternately stacked in sequence along the axial direction of the central rod 1, that is, an iron core 32 is sandwiched between two adjacent windings 31. The wiring cable portion 22 extends along the axial direction of the magnetic component 3. The outer end leads of the windings 31 are winding leads. The wiring cable portion 22 includes three-phase wiring, and the same-phase windings 31 can be connected through the corresponding same-phase wiring cable portions 22. Specifically, the electromagnetic damper 1000 is a linear motor, and the mover 600 of the electromagnetic damper 1000 performs linear motion relative to the stator 100 of the electromagnetic damper 1000. The structure of multiple windings 31 and multiple iron cores 32 can enhance the strength of the magnetic field generated by the magnetic component 3. The iron core 32 can concentrate and guide the magnetic field, making the magnetic field stronger and more stable, and improving working efficiency of the magnetic component 3.

For example, the windings 31 and iron cores 32 are both annular. The magnetic component 3 is composed of multiple windings 31 and iron cores 32 stacked one layer at a time. The windings 31 and iron cores 32 are stacked along the axial direction of the central rod 1. After stacking, the magnetic component 3 is sleeved on the central rod 1, ultimately forming a cylindrical shape. The windings 31 are formed by stacking windings from the inside outward, one coil at a time, until the final coil at the outermost end, forming a coiled spring-like spiral structure. The innermost winding ends are radially extended to the outermost layer. There are three or six wire outlet slots 322 evenly distributed on the circumference of each iron core 32. The wire outlet slots 322 can constrain the wire outlet direction. The winding end of each layer of winding 31 is led out from the designated wire outlet slot 322. According to the principle that the three-phase lines must be connected together in the same phase, the same-phase winding 31 can be led out along the wire outlet slots 322 at the same angle, so that the same-phase winding ends can be easily connected from top to bottom from the outside of the magnetic component 3 using the corresponding wiring cable portion 22. It is worth noting that the winding of each layer of winding 31 of the magnetic component 3 is superimposed from the inside to the outside until the last circle on the outermost side, and the winding lead at the innermost end is also radially led out to the outside of the outermost layer. Therefore, after the winding of each layer of winding 31 of the magnetic component 3 of the present application is completed, the wire is output from the outside of the magnetic component 3, and the winding lead is also connected to the cable 2 on the outside of the magnetic component 3. This winding 31 output from the outside is not only simple to thread back and forth and assemble, saves materials, but also effectively utilizes the available space. The connection on the outside of the magnetic component 3 has a greater tool operating space, which is conducive to assembly, and the output wire contact is more stable. It is also easy to troubleshoot during later maintenance, reducing maintenance costs.

The iron core 32 and the winding 31 are arranged alternately along the axial direction of the central rod 1, and the winding leads are connected to the wiring cable portion 22 through the wire outlet slot 322 set on the iron core 32. The wire outlet slot 322 is not only convenient for wire outlet, but also can fix the wiring cable portion 22, so as to facilitate the connection of the same-phase winding leads of each layer through the wiring cable portion 22. The same-phase winding leads are connected through the wiring cable portion 22, and the wiring cable portion 22 is embedded in the wire outlet slot 322. In one aspect, it can fix the wiring cable portion 22 and reduce the shaking of the wiring cable portion 22; in another aspect, the structure is simple, the fixation reliability is high, and it is easy to assemble.

Optionally, the magnetic component 3 may include an iron core 32 and multiple windings 31. The iron core 32 is provided with multiple winding slots, the winding slots can be installed with the windings 31, and the winding slots can extend radially. Multiple wire outlet slots 322 are provided on the outer peripheral surface of the iron core 32, and the wire outlet slots 322 can extend axially.

For example, after the U-phase end of the first U-phase winding 31, the V-phase end of the first V-phase winding 31, and the W-phase end of the first W-phase winding 31 are connected to the wiring cable portions 22 of the corresponding phases, the different wiring cable portions 22 can be connected after passing through the corresponding wire outlet slots 322 and wire inlet passages 3212. The number of wire inlet passages 3212 is equal to the total number of phases of the winding 31. In the radial direction of the iron core 32, a wire outlet slot 322 is correspondingly provided on the outside of each wire inlet passage 3212. As a result, the wiring cable portions 22 connecting the ends of the same-phase windings can pass through the corresponding wire outlet slots 322 and the wire inlet passages 3212 provided for the corresponding wire outlet slots 322. This arrangement can make the structure more compact.

For example, a wire harness fixing slot 3211 connected to the wire inlet passage 3212 is defined between multiple reinforcing ribs 321, and part of the wiring cable portion 22 is accommodated in the wire harness fixing slot 3211. By providing the wire harness fixing slot 3211, the wiring cable portion 22 can be constrained to prevent the wiring cable portion 22 from shaking at will, reduce the probability of damage to the wiring cable portion 22, and improve service life of the wiring cable portion 22.

As shown in FIG. 10, in some embodiments, one axial end of the cable outlet device 4 has a cable threading hole inlet, and the other axial end of the cable outlet device 4 has a cable threading hole outlet. The cable 2 can pass through the cable threading hole inlet and the cable threading hole outlet. There are multiple cable threading hole outlets, and the multiple cable threading hole outlets are spaced apart along the axis of the cable outlet device 4. The cable threading hole outlets can be aligned with the corresponding central rod cable outlet through-holes 16, thereby reducing the probability of the cable 2 being squeezed.

As shown in FIG. 10, in some embodiments, the cable threading hole inlet and the cable threading hole outlet correspond one to one, and a cable channel 41 for fixing the corresponding cable 2 is formed between the cable threading hole inlet and the corresponding cable threading hole outlet, and the diameter of the cable channel 41 differs from the outer diameter of the fixed cable 2 by no more than 5 mm. The cable channel 41 can fix the cable 2, and the cable threading hole outlet of the cable channel 41 can be aligned with the corresponding central rod cable outlet through-hole 16. By providing the cable channel 41 on the cable outlet device 4, the outlet direction of the cable 2 can be guided and the movement of the cable 2 can be constrained. In addition, since the diameter of the cable channel 41 differs from the outer diameter of the fixed cable 2 by no more than 5 mm, the fixing and restraining effect of the cable channel 41 on the cable 2 can be improved. Optionally, the diameter of the cable channel 41 differs from the outer diameter of the fixed cable 2 by 1 mm, 2 mm, 3 mm, 4 mm, 5 mm, etc.

As shown in FIGS. 1, 3, 4 and 10, for example, the cable outlet device 4 is arranged in the cable routing cavity 13 of the central rod 1, and the cable channel 41 passes through the cable outlet device 4 along the axial direction of the cable outlet device 4 (the up and down direction as shown in FIG. 1). As shown in FIGS. 1 and 10, the cable channel 41 includes a cable threading hole inlet and a cable threading hole outlet. The cable threading hole outlet here is the outlet of the cable channel 41, and the cable threading hole outlet is aligned with the corresponding central rod cable outlet through-hole 16. The cable threading hole inlet and the cable threading hole outlet are located at the two ends of the cable channel 41 in the axial direction. The cable threading hole inlet is close to the upper end of the first rod segment 11, and the cable threading hole outlet is close to the upper end of the second rod segment 12. The cable 2 enters the cable channel 41 from the cable threading hole inlet, and the cable 2 passes through the cable channel 41 from the cable threading hole outlet. Then, the cable 2 passes through the central rod cable outlet through-hole 16 corresponding to the cable threading hole outlet of the cable channel 41.

As shown in FIGS. 1 to 3 and FIG. 8, in some embodiments, the magnetic component 3 includes an iron core 32 and a winding 31. The iron core 32 includes a plurality of winding slots, and the plurality of winding slots are dispersed along the axial direction of the iron core 32. The winding 31 can be wound in the winding slots, and the winding slots can position and install the winding 31. The outer end lead of the winding 31 is a winding lead, and the winding lead can be connected to the cable 2, so that the electrical connection between the magnetic component 3 and the cable 2 can be achieved. The winding lead is the outer end lead of the winding 31, which is convenient for realizing the electrical connection operation between the magnetic component 3 and the cable 2 from the peripheral space of the magnetic component 3. The operating space is large and relatively convenient. By arranging the winding 31 in the winding slot, the structure of the magnetic component 3 can be simplified, and the internal structure of the magnetic component 3 can be made more compact.

As shown in FIGS. 1 to 3, in some embodiments, the cable 2 includes a phase cable portion 23 and a wiring cable portion 22, and the phase cable portion 23 and the wiring cable portion 22 are connected to each other. The phase cable portion 23 is located in the cable routing cavity 13 and part of the phase cable portion 23 can pass through the central rod cable outlet through-hole 16. The winding 31 has multiple winding leads of the same phase, and multiple winding leads of the same phase are connected in series through the wiring cable portion 22. That is to say, the wiring cable portion 22 is connected in series with the winding leads of the same phase, and the wiring cable portion 22 is connected to the phase cable portion 23, thereby realizing the electrical connection between the cable 2 and the magnetic component 3. For example, the series connection of multiple winding leads of the same phase through the wiring cable portion 22 and the connection between the phase cable portion 23 and the wiring cable portion 22 can be carried out independently, which is conducive to improving assembly efficiency and achieving mass production. In conjunction with the above embodiment, the cable 2 includes a phase cable portion 23 and a wiring cable portion 22. The phase cable portion 23 is located within the cable routing cavity 13, and a portion of the phase cable portion 23 can be passed through the central rod cable outlet through-hole 16. The wiring cable portion 22 is arranged on the periphery of the magnetic component 3 and connected to the phase cable portion 23. As a result, the phase cable portion 23 can be connected to the wiring cable portion 22 on the periphery of the magnetic component 3, improving assembly efficiency and convenience. As shown in FIG. 10, the cable outlet device 4 has a cable channel 41. The cable channel 41 can fix the phase cable portion 23, and the outlet of the cable channel 41 can be aligned with the corresponding central rod cable outlet through-hole 16. By providing the cable channel 41 on the cable outlet device 4, the outlet direction of the phase cable portion 23 can be guided and the movement of the phase cable portion 23 can be restricted. The cable outlet device 4 can extend along the axial direction of the central rod 1, and the maximum outer diameter of the cable outlet device 4 is smaller than the minimum inner diameter of the central rod 1, so that the cable outlet device 4 can be accommodated in the cable routing cavity 13. The phase cable portion 23 can be partially arranged inside the cable outlet device 4. The cable outlet device 4 is configured in the cable routing cavity 13 of the central rod 1, and the cable channel 41 passes through the cable outlet device 4 along the axial direction of the cable outlet device 4 (the up and down direction as shown in FIG. 1). As shown in FIG. 10, the cable channel 41 includes a cable threading hole inlet and a cable threading hole outlet. The cable threading hole outlet here is the outlet of the cable channel 41, and the cable threading hole outlet is aligned with the corresponding central rod cable outlet through-hole 16. The cable threading hole inlet and the cable threading hole outlet are located at the two ends of the cable channel 41 in the axial direction. The cable threading hole inlet is close to the upper end of the first rod segment 11, and the cable threading hole outlet is close to the upper end of the second rod segment 12. The phase cable portion 23 enters the cable channel 41 from the cable threading hole inlet, and the phase cable portion 23 passes through the cable channel 41 from the cable threading hole outlet, and then the phase cable portion 23 passes through the central rod cable outlet through-hole 16 corresponding to the outlet of the cable channel 41.

For example, the interior of the cable outlet device 4 is an integral cavity structure, and the cable threading hole inlet and the cable threading hole outlet are both connected to the cavity structure inside the cable outlet device 4.

In some embodiments, there are multiple windings 31 of the same phase, and the wiring cable portion 22 is divided into multiple sections. The winding leads of adjacent and same-phase windings 31 are connected in series through the corresponding wiring cable portions 22. The winding leads and the wiring cable portions 22 are connected and assembled and can be further split, which is conducive to improving assembly efficiency and achieving mass production.

For example, when winding 31 is a three-phase winding, winding 31 includes a U-phase winding, a V-phase winding, and a W-phase winding. The following uses multiple U-phase windings, such as a first U-phase winding, a second U-phase winding, and a third U-phase winding, as examples to illustrate a connection structure in which multiple same-phase winding ends are connected in series via wiring cable portion 22.

The U-phase winding is wound by the U-phase winding, and the U-phase winding is installed in the winding slot. The winding leads of the U-phase winding are U-phase one end and U-phase two end respectively. The U-phase one end is the starting end of the U-phase winding, and the U-phase two end is the end of the U-phase winding, wherein the U-phase one end and the U-phase two end are both led to the outside of the magnetic component 3, and the U-phase two ends of the first U-phase winding can be connected to the U-phase one end of the second U-phase winding through the wiring cable portion 22, and the U-phase two ends of the second U-phase set can be connected to the U-phase one end of the third U-phase winding through the wiring cable portion 22, and the U-phase two ends of the third U-phase winding can be connected to the U-phase one end of the fourth U-phase winding through the wiring cable portion 22. If the U-phase winding includes N, where N is a positive integer, then after multiple winding ends of the same phase are connected in series through the wiring cable portion 22, only the U-phase one end of the first U-phase winding and the U-phase two ends of the Nth U-phase winding are left unconnected. According to the above embodiment, the U-phase ends of the N-th U-phase winding can be connected to the phase cable portion 23 via the wiring cable portion 22. The V-phase winding and the W-phase winding are similar and will not be described in detail here.

As shown in FIG 8, in some embodiments, a plurality of wire outlet slots 322 are provided on the outer circumference of the iron core 32. The plurality of wire outlet slots 322 are spaced apart along the circumference of the iron core 32. At least a portion of the wiring cable portion 22 can be embedded within the wire outlet slots 322. This means that the winding ends can be led out to the outer circumference of the magnetic component 3. The winding ends can be connected to the wiring cable portion 22 within the corresponding wire outlet slots 322 on the outer circumference of the magnetic component 3. This increases the tool operating space and the assembly space, thereby reducing the assembly difficulty and improving the assembly efficiency. This is beneficial for mass production and makes it easier to visually detect problems during subsequent maintenance, thereby reducing maintenance costs. The bottom end of the iron core 32 is provided with a plurality of reinforcing ribs 321. The plurality of reinforcing ribs 321 are spaced apart to form wire inlet passages 3212. The wiring cable portion 22 can be connected to the wiring cable portion 22 of other phases through the corresponding wire outlet slots 322 and wire inlet passages 3212. This arrangement can make the structure more compact.

For example, the number of wire outlet slots 322 is a positive integer multiple of the total number of phases of the winding 31. The number of wire outlet slots 322 is Z, and the total number of phases of the winding 31 is M. If Q = Z/M, then Q is a positive integer. For example, if M = 3, Z can be a multiple of three, such as 3, 6, 9, or 12. This arrangement can make the spatial arrangement of the multi-phase winding 31 symmetrical, and the electric potential and magnetic potential generated by each phase winding 31 should be symmetrical, thereby improving the stability and reliability of the electromagnetic damper 1000. It can also meet the various outlet arrangement requirements of the winding leads of the winding 31.

In some embodiments, the magnetic component 3 includes a plurality of windings 31 and a plurality of iron cores 32. The windings 31 and the iron cores 32 can be alternately stacked in sequence along the axial direction of the central rod 1, that is, an iron core 32 is sandwiched between two adjacent windings 31. The wiring cable portion 22 extends along the axial direction of the magnetic component 3. The outer end leads of the windings 31 are winding leads. The wiring cable portion 22 includes three-phase wiring, and the same-phase windings 31 can be connected through the corresponding same-phase wiring cable portions 22. Specifically, the electromagnetic damper 1000 is a linear motor, and the mover 600 of the electromagnetic damper 1000 performs linear motion relative to the stator 100 of the electromagnetic damper 1000. The structure of multiple windings 31 and multiple iron cores 32 can enhance the strength of the magnetic field generated by the magnetic component 3. The iron core 32 can concentrate and guide the magnetic field, making the magnetic field stronger and more stable, and improving the working efficiency of the magnetic component 3.

For example, the windings 31 and iron cores 32 are both annular. The magnetic component 3 is composed of multiple windings 31 and iron cores 32 stacked one layer at a time. The windings 31 and iron cores 32 are stacked along the axial direction of the central rod 1. After stacking, the magnetic component 3 is sleeved on the central rod 1, ultimately forming a cylindrical shape. The windings 31 are formed by stacking windings from the inside outward, one coil at a time, until the final coil at the outermost end, forming a coiled spring-like spiral structure. The innermost winding ends are radially extended to the outermost layer. There are three or six wire outlet slots 322 evenly distributed on the circumference of each iron core 32. The wire outlet slots 322 can constrain the wire outlet direction. The winding end of each layer of winding 31 is led out from the designated wire outlet slot 322. According to the principle that the three-phase lines must be connected together in the same phase, the same-phase winding 31 can be led out along the wire outlet slots 322 at the same angle, so that the same-phase winding ends can be easily connected from top to bottom from the outside of the magnetic component 3 using the corresponding wiring cable portion 22. It is worth noting that the winding of each layer of winding 31 of the magnetic component 3 is superimposed from the inside to the outside until the last circle on the outermost side, and the winding lead at the innermost end is also radially led out to the outside of the outermost layer. Therefore, after the winding of each layer of winding 31 of the magnetic component 3 of the present application is completed, the wire is output from the outside of the magnetic component 3, and the winding lead is also connected to the cable 2 on the outside of the magnetic component 3. This winding 31 output from the outside is not only simple to thread back and forth and assemble, saves materials, but also effectively utilizes the available space. The connection on the outside of the magnetic component 3 has a greater tool operating space, which is conducive to assembly, and the output wire contact is more stable. It is also easy to troubleshoot during later maintenance, reducing maintenance costs.

The iron core 32 and the winding 31 are arranged alternately along the axial direction of the central rod 1, and the winding leads are connected to the wiring cable portion 22 through the wire outlet slot 322 set on the iron core 32. The wire outlet slot 322 is not only convenient for wire outlet, but also can fix the wiring cable portion 22, so as to facilitate the connection of the same-phase winding leads of each layer through the wiring cable portion 22. The same-phase winding leads are connected through the wiring cable portion 22, and the wiring cable portion 22 is embedded in the wire outlet slot 322. In one aspect, it can fix the wiring cable portion 22 and reduce shaking of the wiring cable portion 22; in another aspect, the structure is simple, the fixation reliability is high, and it is easy to assemble.

Optionally, the magnetic component 3 may include an iron core 32 and multiple windings 31. The iron core 32 is provided with multiple winding slots, the winding slots can be installed with the windings 31, and the winding slots can extend radially. Multiple wire outlet slots 322 are provided on the outer peripheral surface of the iron core 32, and the wire outlet slots 322 can extend axially.

For example, after the U-phase end of the first U-phase winding 31, the V-phase end of the first V-phase winding 31, and the W-phase end of the first W-phase winding 31 are connected to the wiring cable portions 22 of the corresponding phases, the different wiring cable portions 22 can be connected after passing through the corresponding wire outlet slots 322 and wire inlet passages 3212. The number of wire inlet passages 3212 is equal to the total number of phases of the winding 31. In the radial direction of the iron core 32, a wire outlet slot 322 is correspondingly provided on the outside of each wire inlet passage 3212. As a result, the wiring cable portions 22 connecting the ends of the same-phase windings can pass through the corresponding wire outlet slots 322 and the wire inlet passages 3212 provided for the corresponding wire outlet slots 322. This arrangement can make the structure more compact.

For example, a wire harness fixing slot 3211 connected to the wire inlet passage 3212 is defined between multiple reinforcing ribs 321, and part of the wiring cable portion 22 is accommodated in the wire harness fixing slot 3211. By providing the wire harness fixing slot 3211, the wiring cable portion 22 can be constrained to prevent the wiring cable portion 22 from shaking at will, reduce the probability of damage to the wiring cable portion 22, and improve service life of the wiring cable portion 22.

As shown in FIGS. 1, 3, and 4, in some embodiments, the stator 100 further includes a limiting pad 5, which is sleeved on the central rod 1 and can cooperate with the central rod cable outlet through-hole 16. The limiting pad 5 and the central rod cable outlet through-hole 16 jointly fix the cable 2. The limiting pad 5 can protect the cable 2 and ensure the reliability of the electrical system.

As shown in FIGS. 5 to 7, in some embodiments, the central rod 1 includes a first rod segment 11, a second rod segment 12, and a rod ring structure 15, wherein the first rod segment 11 and the second rod segment 12 are separated by the rod ring structure 15. A portion of the central rod cable outlet through-hole 16 is provided on the first rod segment 11, and another portion is provided on the rod ring structure 15. The limiting pad 5 is a structural member that can be mounted on the first rod segment 11. The limiting pad 5 and the central rod cable outlet through-hole 16 enclose a wiring cable limit passage, through which the cable 2 can pass. Specifically, the central rod cable outlet through-hole 16 includes a first outlet half hole 111 and a second outlet half hole 152. The first outlet half hole 111 is provided on the first rod segment 11, and the second outlet half hole 152 is provided on the rod ring structure 15. The radial length of the second outlet half hole 152 in the central rod 1 is greater than the radial length of the first outlet half hole 111 in the central rod 1. The limiting pad 5 has a limiting pad half hole. The limiting pad half hole and the central rod cable outlet through-hole 16 enclose a wiring cable limiting passage. That is, the limiting pad half hole and the second outlet half hole 152 enclose a wiring cable limiting passage, through which the cable 2 can pass. As a result, the structure of the central rod 1 can be more compact, the wiring cable limiting passage can protect the cable 2, and the rod ring structure 15 can limit the axial movement of the magnetic component 3, preventing the magnetic component 3 from moving to the first rod segment 11.

For example, referring to FIG. 1, the cable 2 is a three-phase cable 2, and the cable 2 is located in the cable routing cavity 13, so the cable 2 in the figure is the phase cable portion 23. As shown in FIGS. 3 and 6, the central rod cable outlet through-holes 16 include three, each central rod cable outlet through-hole 16 corresponds to a phase cable portion 23, and the outlet of the cable channel 41 is aligned with the central rod cable outlet through-hole 16. As shown in FIG. 10, there are also three outlets of the cable channel 41 (not fully shown), and the three-phase cable portions 23 respectively pass through the outlets of different cable channels 41 and pass through the corresponding central rod cable outlet through-holes 16, that is, the three-phase cable portions 23 include a U-phase cable portion, a V-phase cable portion and a W-phase cable portion. The U-phase cable portion passes through one cable channel 41 and through one central rod cable outlet through-hole 16, the V-phase cable portion passes through another cable channel 41 and through another central rod cable outlet through-hole 16, and the W-phase cable portion passes through another cable channel 41 and through another central rod cable outlet through-hole 16.

Optionally, on the magnetic component 3, the winding leads of the same-phase winding 31 are connected together by the same-phase wiring cable portion 22 to form the same-phase winding lead group, and the different-phase winding lead groups are connected at the reinforcing ribs 321.

Therefore, the phase cable portion 23 passes through the inner side of the central rod 1 from the outside, passes through the cable threading hole outlet of the cable outlet device 4, and then passes through the central rod cable outlet through-hole 16, and is connected to the wiring cable portion 22 on the outside of the magnetic component 3. The cable outlet is fixed during the whole process, and the cable outlet device 4 plays the role of fixing and protecting the phase cable portion 23, solving the problem of the risk of extrusion and scratching in the related technologies.

Optionally, the cable outlet device 4 can adopt a circular pipe structure, the phase cable portion 23 is fixed in the pipe, and the three-phase cable portions 23 respectively pass through the top and bottom of the three pipes on the cable outlet device 4, and the outlets of the three pipes below the cable outlet device 4 are evenly distributed in the circumferential direction, and the central rod cable outlet through-hole 16 corresponds one by one to the outlets of the three pipes of the cable outlet device 4.

Optionally, three cable threading hole outlets are arranged at equal angles on the cable outlet device 4.

The central rod cable outlet through-hole 16 is set in one-to-one correspondence with the wire outlet slot 322. Specifically, the central rod cable outlet through-hole 16, the wire outlet slot 322 and the cable threading hole outlet of the cable channel 41 are set in one-to-one correspondence, so that the position deviation of the cable 2 is small and the connection is reliable.

For example, the central rod 1 has three central rod cable outlet through-holes 16, three wire outlet slots 322, and three cable threading hole outlets of the cable channel 41, and these three correspond to each other one by one.

As shown in FIGS. 1 and 10, in some embodiments, the end of the cable 2, away from the magnetic component 3, extends outside the central rod 1. The cable 2 is connected to a plug connector 21. Specifically, the plug connector 21 can be connected to a power source to power the magnetic component 3. The plug connector 21 is a quick-change connector that allows for quick connection to the power source, making operation simple and fast.

The linear motor according to the embodiment of the present application includes the stator 100 of the above embodiment.

The electromagnetic damper 1000 according to the embodiment of the present application includes a mover 600 and the stator 100 of the above embodiment. The mover 600 has a mover cavity. The stator 100 is arranged in the mover cavity. The mover 600 can move axially relative to the stator 100.

Specifically, the electromagnetic damper 1000 includes a linear motor, which combines a traditional hydraulic damping shock absorber and a linear motor to form the electromagnetic damper 1000 of the present application. The traditional hydraulic damping shock absorber is a passive vibration absorber and does not require the arrangement of motor output lines. The overall structure of the electromagnetic damper 1000 is based on the traditional hydraulic damping shock absorber, in which the intermediate damper is replaced by a linear motor. Its purpose is to use the linear motor for active vibration reduction on the basis of passive vibration reduction. According to the excitation transmitted by the road surface, active control is achieved by adjusting the magnetic component 3, thereby effectively attenuating the excitation transmitted to the passenger compartment on the route, and ultimately improving the vehicle's passability, smoothness and comfort. According to the structural composition of the electromagnetic damper 1000, it mainly includes a stator 100, a mover 600 and a top mount 700, in which the stator 100 and the mover 600 form a linear motor, and the winding lead of the winding 31 is connected to the stator 100 through the cable 2, and the cable 2 passes through the cable routing cavity 13 of the central rod 1 to the outside of the motor.

The electromagnetic damper 1000 of the embodiment of the present application integrates multiple functions, enabling a greater electromagnetic-force design space and an efficient operating environment while maintaining normal operation, thereby enhancing overall competitiveness. By providing the aforementioned stator 100, the central rod 1 can be applied to the electromagnetic damper 1000. By providing a sensor mounting area 141 on the central rod 1, it can be used to secure the sensor 800, avoiding the need to place the sensor 800 on the mover 600, which would affect its detection accuracy.

As shown in FIGS. 1, 2, and 9, in some embodiments, the mover 600 includes a housing 601, a mover magnet 602, and a guide-post 6032. The mover magnets 602 are evenly distributed on the inner side of the housing 601, providing a fixed magnetic field. The inner side of the mover magnets 602 forms the mover cavity. The mover magnets 602 are sleeved around the outer periphery of the magnetic component 3 and mounted on the inner wall of the housing 601. The mover magnets 602 are positioned between the housing 601 and the magnetic component 3. The cable 2 is partially positioned between the mover magnet 602 and the magnetic component 3. Specifically, a gap is defined between the mover magnet 602 and the magnetic component 3, through which the cable 2 passes and into the wiring cable limiting passage of the first rod segment 11. When the mover magnet 602 linearly moves axially relative to the magnetic component 3, interference with the cable 2 is avoided, and the structure of the electromagnetic damper 1000 is more compact. The guide-post 6032 is connected to the housing 601, and the guide-post 6032 can also be connected to the lower control arm of the vehicle 10000. The hollow cavity includes a guide cavity 19. At least part of the guide-post 6032 can extend into the guide cavity 19 and can move axially along the central rod 1, that is, the guide-post 6032 plays a guiding role, thereby improving the stability and reliability of the axial movement of the mover 600.

As shown in FIGS. 1 and 2, for example, the mover 600 includes a housing 601 and a clevis 603. The mover magnet 602 is mounted on the inner wall of the housing 601. The clevis 603 can be connected to the housing 601. The clevis 603 is also used to connect to the lower control arm of the subframe. Specifically, the clevis 603 and the lower control arm are assembled to the subframe in conjunction with each other. The clevis 603 and the housing 601 are connected by bolts, together forming a closed operating environment inside the electromagnetic damper 1000. The connection between the electromagnetic damper 1000 and the vehicle 10000 is achieved through the housing 601 and the clevis 603, and the structural layout is reasonable.

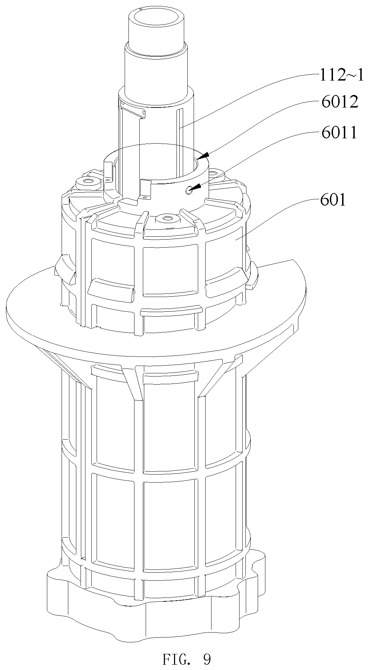

As shown in FIGS. 1 and 9, one end of the housing 601 is connected to a clevis 603, which is provided with a guide-post 6032. The guide-post 6032 is located near the second rod segment 12 of the central rod 1. The other end of the housing 601 forms a housing bore 6012, through which the central rod 1 can pass. When the mover 600 moves, the housing 601 moves accordingly. When the mover 600 is in the first extreme position, the central rod 1 protrudes the most from the housing bore 6012. When the mover 600 is in the second extreme position, the central rod 1 protrudes the least from the housing bore 6012. The intermediate position of the mover 600 is between the first and second extreme positions. In other words, the housing 601 moves relative to the central rod 1 at the housing bore 6012, and the guide-post 6032 moves relative to the central rod 1 at the opening of the second rod segment 12. For example, the first plain bearing 6041 is embedded in the housing bore 6012 of the housing 601. Specifically, the first plain bearing 6041 is embedded in the frustum of the housing bore 6012. The frustum can be radially staggered with the upper support member 701, thereby increasing the axial space of the electromagnetic damper 1000.

As shown in FIGS. 1, 2 and 9, optionally, the clevis 603 includes a clevis body 6031, a guide post 6032 connected to the side of the clevis body 6031 facing the central rod 1, and the mover 600 further includes a buffer pad 605, which is located between the clevis body 6031 and the central rod 1, and the buffer pad 605 is sleeved on the guide post 6032 and is located outside the end of the central rod 1. When the mover 600 moves to the second extreme position, the buffer pad 605 can absorb the collision of the clevis body 6031 on the central rod 1, and can buffer the impact of the mover 600 on the stator 100 under extreme working conditions, thereby protecting the magnetic component 3 on the stator 100, playing a protective role and reducing noise.

For example, one end of the second rod segment 12 of the central rod 1 is connected to the first rod segment 11. The other end of the second rod segment 12 has an opening that communicates with the guide cavity 19. The guide-post 6032 can pass through the opening and extend into the guide cavity 19. When the mover 600 moves, the mover 600 has a first extreme position, a second extreme position, and an intermediate position. When the mover 600 is in the first extreme position, the guide-post 6032 extends the least into the guide cavity 19. When the mover 600 is in the second extreme position, the guide-post 6032 extends the most into the guide cavity 19. The intermediate position of the mover 600 is between the first and second extreme positions.

As shown in FIGS. 1 to 4, in some embodiments, the electromagnetic damper 1000 also includes a first plain bearing 6041 and a second plain bearing 6042, the housing 601 has a housing bore 6012, the central rod 1 passes through the housing bore 6012 to partially extend out of the housing 601, the first plain bearing 6041 is arranged between the housing bore 6012 and the outer peripheral surface of the central rod 1, and the second plain bearing 6042 is arranged between the outer peripheral surface of the guide post 6032 and the cavity wall of the hollow cavity. That is to say, the first plain bearing 6041 is arranged at the plug-in fitting between the housing 601 and the central rod 1, and the second plain bearing 6042 is arranged at the plug-in fitting between the guide post 6032 and the guide cavity 19, that is, the first plain bearing 6041 is arranged at the housing bore 6012 of the housing 601, and the second plain bearing 6042 is arranged at the opening of the second rod segment 12. By arranging the first plain bearing 6041 and the second plain bearing 6042, the sliding of the mover 600 can be made smoother, the operation accuracy of the electromagnetic damper 1000 can be improved, and the noise can be reduced.

As shown in FIG. 1, in some embodiments, the guide cavity 19 may be in communication with the cable routing cavity 13, and the guide cavity 19 and the cable routing cavity 13 together form a hollow cavity.

Alternatively, in other embodiments, the guide cavity 19 may be separated from the cable routing cavity 13 by a partition wall, and the guide cavity 19 and the cable routing cavity 13 respectively form a part of the hollow cavity.

As shown in FIGS. 1, 4, and 9, in some embodiments, a positioning hole 6011 is provided on the housing 601. A positioning pin can be inserted through the positioning hole 6011 and engage with an anti-rotation groove 112 extending axially on the central rod 1 to limit the rotation of the housing 601 relative to the central rod 1. For example, the stator 100 and the top mount 700 are assembled together via the central rod 1 in the stator 100 and a fastening nut 702. During assembly, the fastening nut 702 is tightened with a torque wrench. To prevent the stator 100 from rotating around the central axis of the central rod 1 along with the fastening nut 702, which would result in an inability to tighten, anti-rotation grooves 112 are provided on both sides of the first rod segment 11 of the central rod 1. The housing 601 has positioning holes 6011 corresponding to the anti-rotation grooves 112. During assembly, a long pin is inserted into the pin hole to prevent rotation, and then the fastening nut 702 is tightened to complete the assembly.

As shown in FIGS. 1, 5, and 6, in some embodiments, the electromagnetic damper 1000 further includes a top mount 700. A spring 607 is disposed between the top mount 700 and the housing 601. A local protrusion in the housing 601 supports the spring 607 and dissipates heat throughout the housing. The spring 607 can also cushion road impacts. The top mount 700 includes an upper support member 701, which can be connected to the vehicle body. The central rod 1 can pass through the upper support member 701 to allow the cable 2 to pass through the top mount 700 and out of the vehicle body. This connection between the electromagnetic damper 1000 and the vehicle body 10000 is achieved through the upper support member 701. The top mount 700 cooperates with the housing 601 and seals the interior of the housing 601, that is, the interior of the electromagnetic damper 1000 is in a sealed state, which improves the stability and reliability of operation; a first threaded segment 171 is provided on the central rod 1, and the fastening nut 702 is located on the side of the upper support member 701 away from the mover 600, and the fastening nut 702 is screwed to the first threaded segment 171. By cooperating with the fastening nut 702 and the first threaded segment 171, the stator 100 can be assembled to the top mount 700, which improves the stability and reliability of the connection and is easy to assemble. The central rod 1 has an end shoulder 113, and the upper support member 701 can stop at the end shoulder 113; the fastening nut 702 is located on the side of the upper support member 701 away from the mover 600, and the fastening nut 702 can be screwed to the first threaded segment 171 on the central rod 1, and the upper support member 701 is clamped between the fastening nut 702 and the end shoulder 113; the cooler 608 is fixed on the central rod 1, and the cooling chamber 142 inside the central rod 1 can exchange heat with the cooler 608 to realize heat exchange.

As shown in FIG. 1, the top mount 700 can be fixed on the vehicle body, the central rod 1 passes through the middle of the upper support member 701, and the cable 2 also passes through the vehicle body to reach the front cabin. By quickly replacing the connector, that is, the plug connector 21 cooperates with the electronic control system, thereby connecting to the electronic control system and finally realizing the control of the electromagnetic damper 1000.

As shown in FIG. 1, for example, a dust cover 606 is provided at the connection between the central rod 1 and the housing 601 to prevent dust and other impurities from entering the interior of the housing 601.

As shown in FIG. 11, a suspension system 2000 according to an embodiment of the present application includes the electromagnetic damper 1000 of the above-described embodiment. By providing the above-described electromagnetic damper 1000, the central rod 1 can be used for the electromagnetic damper 1000. By providing a sensor mounting area 141 on the central rod 1, it can be used to fix the sensor 800, avoiding the problem of placing the sensor 800 on the mover 600 and affecting its detection accuracy.

As shown in FIG. 12, the vehicle 10000 according to the embodiment of the present application includes a suspension system 2000 according to the embodiment of the present application. By providing the above-mentioned suspension system 2000, the central rod 1 can be applied to the electromagnetic damper 1000. By providing the sensor mounting area 141 on the central rod 1, it can be used to fix the sensor 800, avoiding providing the sensor 800 on the mover 600 and affecting its detection accuracy.

It should be emphasized that the central rod 1 of the present application integrates multiple functions such as limiting, positioning, anti-rotation, heat dissipation, guiding, and line output. First, the central rod 1 of the present application fully cooperates with the top mount 700, winding 31, iron core 32, and housing 601, so that in the same axial space, it can realize basic functions such as guidance and meet the external boundary space restrictions such as the top mount 700 and clevis 603, making more valuable axial space for electromagnetic arrangement, so as to obtain better electromagnetic thrust performance; second, the cable 2 of the present application is output from the outside of the magnetic component 3, passes through the cable outlet device 4 assembled inside the central rod 1, and is finally connected to the electric control through a quick-change plug connector 21, wherein the output from the outside of the magnetic component 3 is connected to the electric control device 4. The wires are easier to assemble, and the cable outlet device 4 assembled inside the central rod 1 can well protect and fix the cable 2; thirdly, there is a hollow structure between the inner side and the outer side of the peripheral wall 14 of the central rod 1 of the present application, forming a cooling chamber 142. By adding a cooling medium inside, combined with the cooler 608 assembled on the top of the central rod 1 to form a heat exchange cycle, it is very good to solve the heat dissipation problem of the electromagnetic damper 1000 during operation, and the top of the central rod 1 is in full contact with the inside of the cooler 608 without adding additional parts. The entire cooling solution has a compact structure. Fourthly, the central rod 1 of the present application has threads at the upper and lower ends, and includes a positioning groove 822 and an anti-rotation groove 112, which well solves the assembly problem of the magnetic component 3 and the central rod 1, and the mover 600 and the central rod 1. The central rod 1 of the present application also has the advantages of high functional integration, compact space arrangement, and easy disassembly and assembly.

Other structures and operations of the vehicle 10000 according to the embodiment of the present application are known to ordinary technicians in this field and will not be described in detail here.

In the description of this application, "first feature" and "second feature" may include one or more of these features. The up-down direction, left-right direction and front-back direction shall be based on the up-down direction, left-right direction and front-back direction shown in the figure.

In the description of this application, unless otherwise expressly specified or limited, a first feature being "above" or "below" a second feature may include the first and second features being in direct contact, or the first and second features being in contact not directly but through another feature therebetween. Furthermore, a first feature being "above," "above," and "above" a second feature may include the first feature being directly above or obliquely above the second feature, or may simply mean that the first feature is higher in level than the second feature.

Throughout this specification, reference to terms such as "one embodiment," "some embodiments," "illustrative embodiments," "examples," "specific examples," or "some examples" means that the specific features, structures, materials, or characteristics described in conjunction with the embodiment or example are included in at least one embodiment or example of the present application. In this specification, the illustrative expressions of the above terms do not necessarily refer to the same embodiment or example. Moreover, the specific features, structures, materials, or characteristics described may be combined in any suitable manner in any one or more embodiments or examples.

Although the embodiments of the present application have been shown and described, those skilled in the art will appreciate that various changes, modifications, substitutions, and variations may be made to the embodiments without departing from the principles and intent of the present application, and that the scope of the present application is defined by the claims and their equivalents.

## Claims

1. A central rod (1), the central rod (1) being provided with an anti-rotation groove (112), the anti-rotation groove (112) being adapted to cooperate with a mover (600) to limit rotation of the mover (600) relative to the central rod (1); and an outer surface of the peripheral wall (14) of the central rod (1) being further provided with a sensor mounting area (141) for mounting a sensor (800).

2. The central rod (1) according to claim 1, wherein an interior of the central rod (1) is provided with a hollow cavity, and the peripheral wall (14) of the central rod is provided with a central rod cable outlet through-hole (16) communicating with the hollow cavity.

3. The central rod (1) according to claim 1 or 2, wherein the sensor mounting area (141) at least comprises a sensor positioning plane (1411), and a sensor fixing structure (1412) is arranged on the sensor positioning plane (1411).

4. The central rod (1) according to claim 2, wherein the central rod (1) comprises a first rod segment (11) and a second rod segment (12), the sensor mounting area (141) is located on the first rod segment (11), and a magnetic component mounting area (122) is arranged on the second rod segment (12).

5. The central rod (1) according to claim 4, wherein, in an axial direction of the central rod (1), the central rod cable outlet through-hole (16) is located between the sensor mounting area (141) and the magnetic component mounting area (122).

6. The central rod (1) according to claim 4 or 5, wherein the interior of the central rod (1) is provided with a cooling chamber (142), and the cooling chamber (142) is adapted to accommodate a cooling medium, and the cooling chamber (142) extends from the second rod segment (12) into the first rod segment (11).

7. The central rod (1) according to claim 6, wherein the cooling chamber (142) is a closed chamber; or, a medium filling port (1421) communicating with the cooling chamber (142) is arranged at one end of the first rod segment (11) remote from the second rod segment (12).

8. The central rod (1) according to any one of claims 4 to 7, wherein the anti-rotation groove (112) is arranged in the first rod segment (11).

9. The central rod (1) according to any one of claims 4 to 8, wherein a positioning groove (822) is arranged in the second rod segment (12), and the positioning groove (822) is adapted to cooperate with a magnetic component (3) installed on the magnetic component mounting area (122) to limit a rotation of the magnetic component (3) relative to the central rod (1).

10. The central rod (1) according to any one of claims 4 to 9, wherein the central rod (1) further comprises a rod ring structure (15), and an outer diameter of the rod ring structure (15) is greater than an outer diameter of the second rod segment (12), the rod ring structure (15) is used to stop the magnetic component (3) in the axial direction of the central rod (1), and the central rod cable outlet through-hole (16) is formed on the side of the rod ring structure (15) facing away from the second rod segment (12).

11. The central rod (1) according to claim 10, wherein the end of the first rod segment (11) remote from the second rod segment (12) is provided with a first threaded segment (171) for screwing with a fastening nut (702), and the end of the second rod segment (12) remote from the first rod segment (11) is provided with a second threaded segment (172) for screwing with a limiting nut (18), and the magnetic component mounting area (122) is located between the rod ring structure (15) and the second threaded segment (172).

12. A stator (100), comprising:
the central rod (1) according to any one of claims 1 to 11; and
a position sensor (800), the position sensor (800) being mounted in the sensor mounting area (141).

13. The stator (100) according to claim 12, wherein the stator (100) further comprises:
a cable (2) passing through the central rod cable outlet through-hole (16), wherein the cable (2) is partially located in the hollow cavity inside the central rod (1) and partially located outside the central rod (1); and
a magnetic component (3) sleeved on the magnetic component mounting area (122) of the central rod (1), wherein the cable (2) is partially disposed on an outer periphery of the magnetic component (3), and the magnetic component (3) comprises winding leads extending to the outer periphery of the magnetic component (3) and adapted to connect to the cable (2).

14. The stator (100) according to claim 13, wherein the central rod (1) comprises a first rod segment (11) and a second rod segment (12), the sensor mounting area (141) is located on the first rod segment (11), the magnetic component mounting area (122) is located on the second rod segment (12), the hollow cavity comprises a cable routing cavity (13) inside the first rod segment (11), the central rod cable outlet through-hole (16) communicates with the cable routing cavity (13), and the stator (100) further comprises a cable outlet device (4) disposed in the cable routing cavity (13) to fix the cable (2).

15. The stator (100) according to claim 14, wherein one axial end of the cable outlet device (4) is provided with a cable threading hole inlet, the other axial end of the cable outlet device (4) is provided with a cable threading hole outlet, the cable (2) is adapted to pass through the cable threading hole inlet and the cable threading hole outlet, a plurality of cable threading hole outlets are provided, the plurality of cable threading hole outlets are spaced apart along the axis of the cable outlet device (4), and the cable threading hole outlets are adapted to be aligned with the corresponding central rod cable outlet through-holes (16).

16. The stator (100) according to claim 15, wherein the cable threading hole inlet is in one-to-one correspondence with the cable threading hole outlet, and a cable channel (41) for fixing the corresponding cable (2) is formed between the cable threading hole inlet and the corresponding cable threading hole outlet, and a difference between a diameter of the cable channel (41) and an outer diameter of the corresponding cable (2) fixed therein is not greater than 5 mm.

17. The stator (100) according to any one of claims 13 to 16, wherein:
the magnetic component (3) comprises:
an iron core (32) comprising a plurality of winding slots distributed along the axial direction of the iron core (32);
a winding (31) wound in the winding slots, outer end leads of the winding (31) form the winding leads, and the winding leads are connected to the cable (2);
the cable (2) comprises a phase cable portion (23) and a wiring cable portion (22) connected to each other, and the phase cable portion (23) is located inside the hollow cavity and passes through the central rod cable outlet through-hole (16), and the winding (31) has a plurality of winding leads of the same phase, and the plurality of winding leads of the same phase are connected in series through the wiring cable portion (22).

18. The stator (100) according to claim 17, wherein a plurality of windings (31) of the same phase are provided, the wiring cable portion (22) is arranged in multiple segments, and the winding leads of adjacent windings (31) of the same phase are connected in series through corresponding wiring cable portions (22).

19. The stator (100) according to claim 17 or 18, wherein a plurality of wire outlet slots (322) are arranged in the iron core (32), the wire outlet slots (322) are circumferentially spaced apart on the iron core (32), at least part of the wiring cable portion (22) is adapted to be embedded in the wire outlet slots (322), a plurality of reinforcing ribs (321) are arranged at a bottom end portion of the iron core (32), the reinforcing ribs (321) are spaced apart to form wire inlet passages (3212), and the wiring cable portion (22) is adapted to be connected to the wiring cable portions (22) of other phases through the corresponding wire outlet slots (322) and wire inlet passages (3212).

20. The stator (100) according to any one of claims 13 to 19, wherein the stator (100) further comprises a limiting pad (5), the limiting pad (5) is sleeved on the central rod (1), and the limiting pad (5) cooperates with the central rod cable outlet through-hole (16) to secure the cable (2);
the central rod (1) further comprises a first rod segment (11), a second rod segment (12) and a rod ring structure (15), the first rod segment (11) and the second rod segment (12) are spaced apart by the rod ring structure (15), one part of the central rod cable outlet through-hole (16) is formed in the first rod segment (11), and the other part is formed in the rod ring structure (15), the limiting pad (5) is sleeved on the first rod segment (11), and the limiting pad (5) and the central rod cable outlet through-hole (16) enclose the wiring cable limiting passage, and the cable (2) is adapted to pass through the wiring cable limiting passage.

21. The stator (100) according to any one of claims 13 to 20, wherein one end of the cable (2) remote from the magnetic component (3) passes out of the central rod (1) and is connected to a plug connector (21).

22. An electromagnetic damper (1000), comprising:
the stator (100) according to any one of claims 12 to 21;
a mover (600), the mover (600) having a mover cavity, the stator (100) being arranged in the mover cavity, the mover (600) being axially movable relative to the stator (100), and the mover (600) comprising:
a housing (601);
a mover magnet (602), the mover magnet (602) being installed on an inner wall of the housing (601), an inner side of the mover magnet (602) forming the mover cavity, and the mover magnet (602) being sleeved on the outer periphery of the magnetic component (3) installed on the central rod (1);
a guide post (6032), the guide post (6032) being connected to the housing (601), the guide post (6032) being further adapted to be connected to a lower control arm of a vehicle (10000), the hollow cavity inside the central rod (1) comprising a guide cavity (19), and at least part of the guide post (6032) being adapted to extend into the guide cavity (19) and axially movable along the central rod (1).

23. The electromagnetic damper (1000) according to claim 22, wherein the electromagnetic damper (1000) further comprises a first plain bearing (6041) and a second plain bearing (6042), and the housing (601) has a housing bore (6012), and the central rod (1) passes through the housing bore (6012) to partially extend out of the housing (601), and the first plain bearing (6041) is disposed between the housing bore (6012) and an outer peripheral surface of the central rod (1), and the second plain bearing (6042) is disposed between an outer peripheral surface of the guide post (6032) and a wall of the hollow cavity.

24. The electromagnetic damper (1000) according to claim 22 or 23, wherein the mover (600) further comprises a buffer pad (605), the buffer pad (605) is sleeved on the guide post (6032) and located outside an end of the central rod (1).

25. The electromagnetic damper (1000) according to any one of claims 22 to 24, wherein the housing (601) is provided with a positioning hole (6011), a positioning pin is adapted to pass through the positioning hole (6011) and cooperate with an anti-rotation groove (112) axially extending on the central rod (1) to limit a rotation of the housing (601) relative to the central rod (1).

26. The electromagnetic damper (1000) according to any one of claims 22 to 25, wherein the electromagnetic damper (1000) further comprises a top mount (700), a spring (607) is disposed between the top mount (700) and the housing (601), the top mount (700) comprises:
an upper support member (701) adapted to be connected to the vehicle body, the central rod (1) is adapted to pass through the upper support member (701), and the central rod (1) has an end shoulder (113), and the upper support member (701) abuts against the end shoulder (113);
a fastening nut (702) located on a side of the upper support member (701) facing away from the mover (600), the fastening nut (702) is adapted to be screwed with a first threaded segment (171) on the central rod (1), and the upper support member (701) is clamped between the fastening nut (702) and the end shoulder (113);
a cooler (608) fixed on the central rod (1), a cooling chamber (142) inside the central rod (1) is adapted to exchange heat with the cooler (608).

27. A vehicle (10000), comprising a suspension system (2000), the suspension system (2000) comprising the electromagnetic damper (1000) according to any one of claims 22 to 26.
